# EUROPEAN PATENT APPLICATION

(11) **EP 1 367 806 A1**
(43) Date of publication of application: **03.12.2003**
(21) Application number: 02788848.6
(22) Date of filing: 17.12.2002
(51) Int. Cl.: H04M 1/80, H04M 3/00, H04M 11/00

(54) **EXCHANGE SYSTEM**

(30) Priority: 19.12.2001 JP 2001386259
(71) Applicant: Matsushita Electric Industrial Co., Ltd., Kadoma-shi, Osaka 571-8501 (JP)
(72) Inventor: MORITA, Junichi, Hachioji-shi, Tokyo 193-0823 (JP); TAKESHITA, Sachiko, Suginami-ku, Tokyo 166-0016 (JP); AMISHIMA, Maki, Kamakura-shi, Kanagawa 247-0065 (JP); URANAKA, Hiroshi, Bunkyo-ku, , Tokyo 113-0021 (JP)
(74) Representative: Grünecker, Kinkeldey, Stockmair & Schwanhäusser Anwaltssozietät
(86) International application number: JP0213157
(87) International publication number: WO03053029

(57) **Abstract**

A switching system that enables the provision of a hold tone in a hold operation to be performed efficiently, comprising a first communication terminal (100) capable of packet communications, a second communication terminal (110) that performs packet communications with the first communication terminal (100), and a network (130) that connects the first communication terminal (100) and second communication terminal (110). When the first communication terminal (100) puts the second communication terminal (110) on hold, the first communication terminal (100) converts hold data (103) that it possesses to audio that can be interpreted by the second communication terminal (110) by means of a hold data conversion section (104), and transmits the converted audio as a hold tone.

## Description

### Technical Field

The present invention relates to a switching system that switches audio calls, etc., carried out in real time between communication terminals via the Internet, a LAN, or the like, andmore particularly to a method for achieving efficiency of processing for putting a call on hold while in progress, transferring a call to another communication terminal, and so forth.

### Background Art

In addition to the use of personal computers on the Internet, a rapid increase is beginning to be seen in the popularity of IP telephony that enables calls to be made via an Internet IP (Internet Protocol) network from an ordinary home telephone terminal.

However, when a telephone network constructed around a PBX installed in an office is replaced by the use of an IP network, measures must be taken to implement a variety of telephone services previously handled by the PBX.

Telephone services carried out by a standard PBX include call hold and transfer services. These are popular services whereby a call made from an outside line or internal line is put on hold while a melody or other hold tone is transmitted, or is transferred to the transfer destination telephone terminal after being put on hold. A conventional telephone network is completely separate from a data network, and a PBX implements telephone functions on a telephone network separate from the data network, but when functions such as hold and transfer are implemented on an IP network in the same way as heretofore, telephone functions are implemented together with ordinary data communications on a single data network, and it is necessary to take terminal capability and network load into consideration.

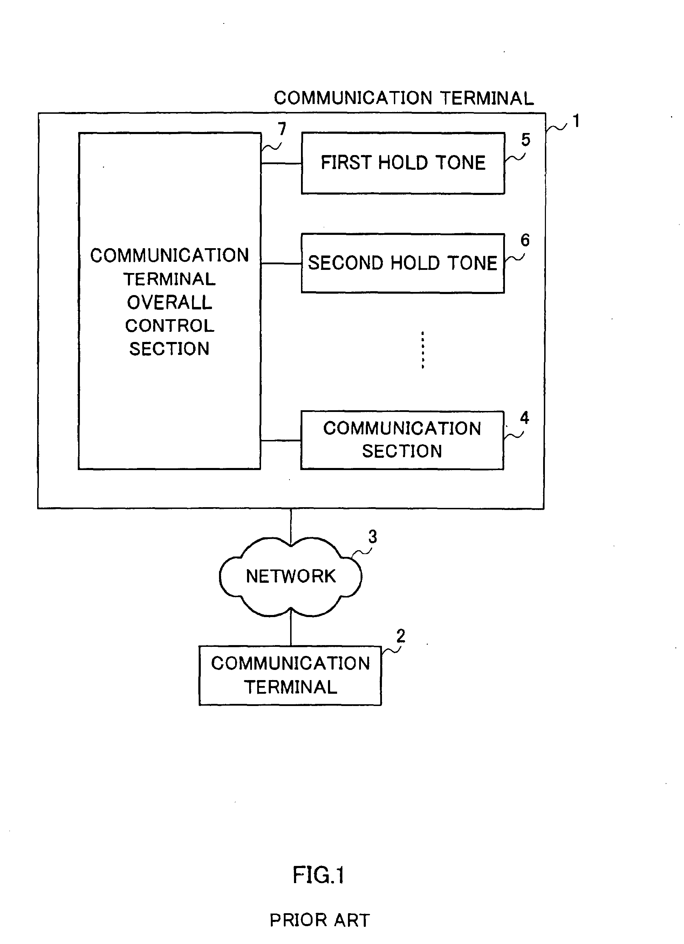

In Unexamined Japanese Patent Publication No. 2000-59471 (Conventional Art Example 1), an Internet telephony system is disclosed that is configured so that, when holding a call, a hold tone can be played back even by a low-performance terminal on hold. As shown in FIG. 1, this system comprises a communication terminal 1 and communication terminal 2 that are connected to and carry out communication via IP network 3. Communication terminal 1 comprises a communication section 4 that handles calls in general, a first hold tone 5, second hold tone 6, etc., compressed by means of a number of different audio compression coding methods, and a communication terminal overall control section 7 that controls communication section 4, first hold tone 5, second hold tone 6, and so on.

With communication terminal 1 and communication terminal 2 in this system, a call is originated from one of the terminals, mutual audio codec (coder/decoder) information is exchanged, the audio coding/decoding method to be used in the call is negotiated, and then a transition is made to an audio call state.

In this audio call state, when a hold operation is performed by communication terminal 1, communication terminal 1 places communication terminal 2 in a hold state. Then, based on communication terminal 2 audio codec information, communication terminal overall control section 7 selects from the stored hold tones, i.e. first hold tone 5, second hold tone 6, etc., a hold tone that can be interpreted by communication terminal 2, and transmits that hold tone to communication terminal 2.

In this way, it is possible for a hold tone to be provided terminal-to-terminal even between two communication terminals of different capabilities.

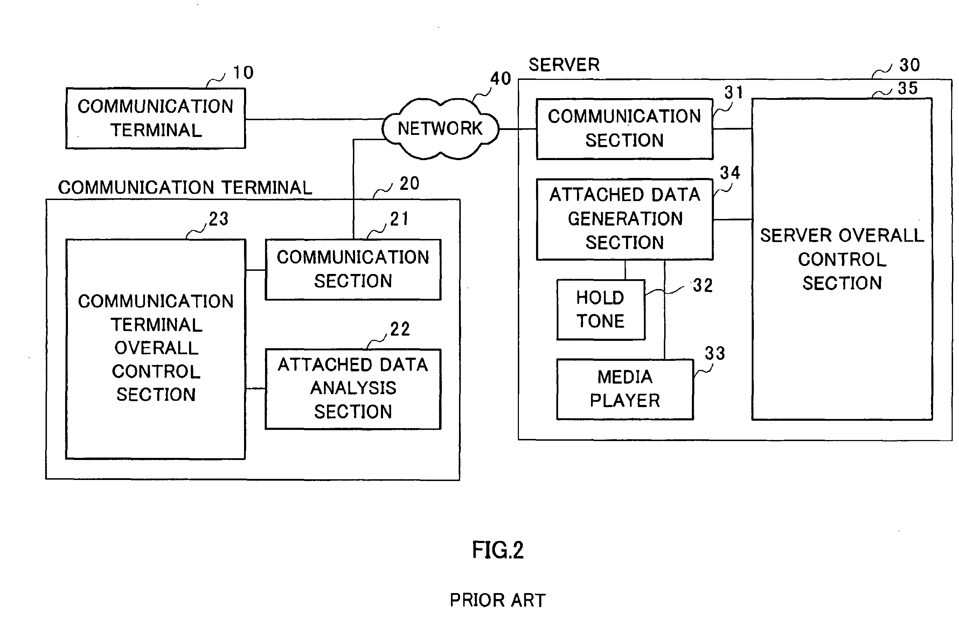

Also, in Unexamined Japanese Patent Publication No. 2000-295354 (Conventional Art Example 2), a hold system is disclosed that provides a hold tone (hold melody) from a dedicated server to a communication terminal in the hold state. As shown in FIG.2, this system comprises communication terminals 10 and 20 that are connected to and carry out communication via network 40, and a server 30 that is connected to network 40 and provides a hold tone.

Communication terminal 20 comprises a communication section 21 that handles calls in general, an attached data analysis section 22 that analyzes data such as a hold tone attached to a message received by communication section 21, and a communication terminal overall control section 23 that controls communication section 21 and attached data analysis section 22.

Server 30 comprises a communication section 31 that handles calls in general, a hold tone 32 held in server 30, a media player 33 for playing back hold tone 32, an attached data generation section 34 that attaches hold tone 32 and media player 33 to a message to communication terminal 20, and a server overall control section 35 that controls communication section 31, hold tone 32, media player 33, and attached data generation section 34.

In this system, when communication terminal 20 enters the hold state, a hold melody is provided to communication terminal 20 from server 30. Under control of server overall control section 35, server 30 attaches hold tone 32 and media player 33 to a message by means of attached data generation section 34, and transmits this message to communication terminal 20 using communication section 31.

At this time, server 30 provides a hold melody to communication terminal 20 so as to alleviate the load on network 40. Therefore, server 30 constantly monitors the throughput of network 40 and detects the available amount of bandwidth, and selects a transmission method in accordance with that amount.

In communication terminal 20, communication section 21 receives the message, and attached data analysis section 22 obtains from the received message the attached hold tone and media player, and plays back the hold tone using the media player.

Furthermore, in Unexamined Japanese Patent Publication No. 2000-270026 (Conventional Art Example 3), an audio path connection method is disclosed that is effective in a case where, in a system in which switches of a conventional telephone network are interconnected via the Internet, a call of a terminal accommodated in a switch is transferred to a terminal accommodated in another switch.

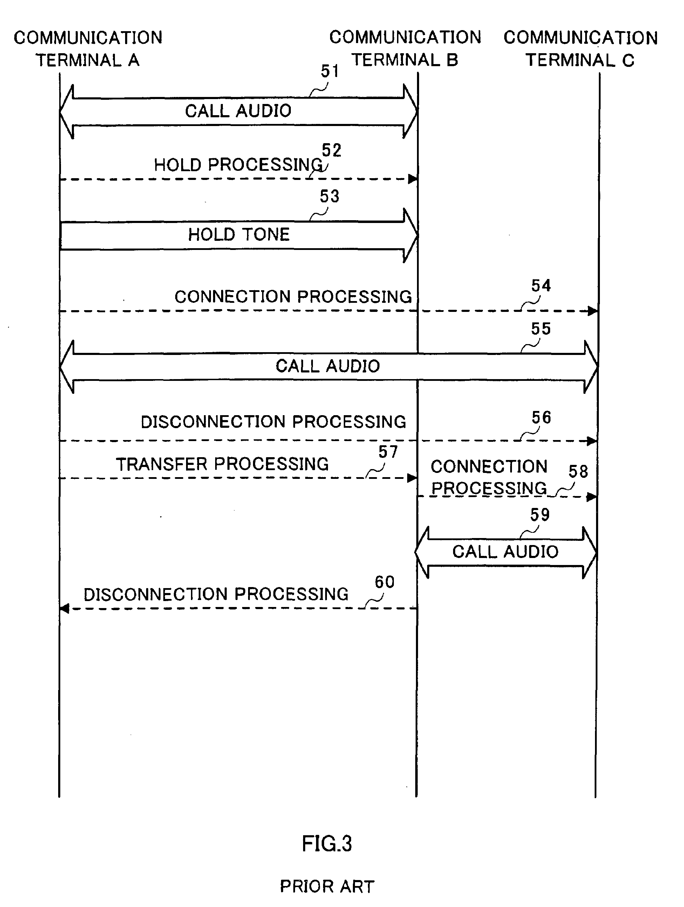

The sequence in this system is shown in FIG.3. A case is shown here in which communication terminal A puts a call with communication terminal B on hold while this call is in progress, and transfers the call to communication terminal C.

When communication terminal A is engaged in a call with communication terminal B (call audio 51), communication terminal A places communication terminal B in the hold state (hold processing 52) and provides a hold tone 53, and meanwhile performs connection processing 54 to connect to communication terminal C, starts a call (call audio 55), and sends communication terminal C a request for a call to communication terminal C by communication terminal B. Next, communication terminal A disconnects the call with communication terminal C (disconnection processing 56), and informs communication terminal B that transfer to communication terminal C is possible (transfer processing 57). Communication terminal B performs connection processing 58 to connect to communication terminal C, starts a call (call audio 59), and disconnects the call with communication terminal A (disconnection processing 60).

By means of this procedure, a call between communication terminal A and communication terminal B can be transferred to a call between communication terminal B and communication terminal C.

However, in the system disclosed in Unexamined Japanese Patent Publication No. 2000-59471 (Conventional Art Example 1), it is necessary to set up a number of hold tones equivalent to the number of codecs for a single hold tone, which is wasteful. Also, when a system is implemented in which a terminal holds a plurality of hold tones, and selects and provides a hold tone from among these according to the communicating party, there is a problem in that it is necessary to store in a terminal a number of hold tones equal to the number of kinds of those hold tones multiplied by the number of codecs, and much of the terminal's memory capacity is used up.

Also, in the hold system disclosed in Unexamined Japanese Patent Publication No. 2000-295354 (Conventional Art Example 2), waste is entailed in that a media player corresponding to a hold tone must be attached and transmitted each time a hold tone is provided.

Furthermore, in the system disclosed in Unexamined Japanese Patent Publication No. 2000-270026 (Conventional Art Example 3) , when transfer is performed, communication terminals A and B temporarily have two audio paths (for example, communication terminal A has an audio path that provides a hold tone to communication terminal B and an audio path that sends a communication terminal B transfer request to communication terminal C by audio) respectively, entailing a heavy load in terms of terminal audio path control and buffer control. Moreover, it is necessary for transfer source communication terminal A to perform transfer request transmission to transfer destination communication terminal C by means of an audio call, and a heavy load is imposed on transfer source and transfer destination users that are busy with their business duties.

### Disclosure of Invention

It is an object of the present invention to provide a switching system that enables the provision of a hold tone to be carried out efficiently when a call is put on hold.

It is a further object of the present invention to provide a switching system that enables processing involved in transfer to be carried out efficiently.

According to one embodiment of the present invention, a switching system connects a first communication terminal and a second communication terminal via a network; the first communication terminal has a storage section that stores hold data used when the first communication terminal places the second communication terminal in a hold state, a conversion section that converts hold data stored in the storage section to a data format that can be processed by the second communication terminal, and a transmission section that transmits hold data after conversion by the conversion section to the second communication terminal; and the second communication terminal has a reception section that receives hold data after conversion transmitted from the first communication terminal, and a playback section that processes and plays back received hold data.

According to another embodiment of the present invention, a switching system connects a first communication terminal and a second communication terminal via a network; the first communication terminal has a storage section that stores hold data used when the first communication terminal places the second communication terminal in a hold state, an attachment section that attaches hold data stored in the storage section to a hold message that is transmitted from the first communication terminal to the second communication terminal in a hold operation, and a transmission section that transmits a hold message to which hold data has been attached by the attachment section; and the second communication terminal has a reception section that receives a hold message after hold data attachment transmitted from the first communication terminal, an acquisition section that acquires hold data attached to a received hold message, a conversion section that converts hold data acquired by the acquisition section to a data format that can be processed by the second communication terminal, and a playback section that processes and plays back hold data after conversion by the conversion section.

According to yet another embodiment of the present invention, a switching system connects a first communication terminal and a second communication terminal via a network through the intermediation of a call control apparatus; the first communication terminal has a storage section that stores hold data used when the first communication terminal places the second communication terminal in a hold state, a first attachment section that attaches hold data stored in the storage section to a hold message that is transmitted from the first communication terminal to the second communication terminal in a hold operation, and a first transmission section that transmits a hold message to which hold data has been attached by the first attachment section; the call control apparatus has a reception section that receives a hold message after hold data attachment transmitted from the first communication terminal, a first acquisition section that acquires hold data attached to a received hold message, a conversion section that converts hold data acquired by the first acquisition section to a data format that can be processed by the second communication terminal, a second attachment section that attaches hold data after conversion by the conversion section to the received hold message, and a second transmission section that transmits a hold message to which hold data after conversion has been attached by the second attachment section; and the second communication terminal has a second reception section that receives a hold message after attachment of hold data after conversion transmitted from the call control apparatus, a second acquisition section that acquires hold data after conversion attached to a received hold message, and a playback section that processes and plays back hold data after conversion acquired by the second acquisition section.

According to yet another embodiment of the present invention, a switching system connects a first communication terminal and a second communication terminal via a network through the intermediation of a call control apparatus; the call control apparatus has a storage section that stores hold data used by a subordinate communication terminal, a distribution section that constantly distributes hold data stored in the storage section by means of multicasting, a provision section that provides a multicast address for receiving hold data distributed by the distribution section to a hold message that is transmitted from the first communication terminal to the second communication terminal when the first communication terminal places the second communication terminal in a hold state, and a transmission section that transmits a hold message to which a multicast address has been provided by the provision section; and the second communication terminal has a first reception section that receives a hold message after multicast address provision transmitted from the call control apparatus, an acquisition section that acquires a multicast address provided to a received hold message, a second reception section that receives hold data distributed by the distribution section using a multicast address acquired by the acquisition section, a conversion section that converts received hold data to a data format that can be processed by the second communication terminal, and a playback section that processes and plays back hold data after conversion by the conversion section.

According to yet another embodiment of the present invention, a switching system comprises a transfer source first communication terminal, a call destination second communication terminal that performs communication with the first communication terminal using multicasting, a transfer destination third communication terminal that performs communication with the first communication terminal and second communication terminal using multicasting, and a network that connects the first communication terminal, second communication terminal, and third communication terminal; the first communication terminal has a provision section that provides a multicast address to a connection message that is transmitted from the first communication terminal to the third communication terminal when the first communication terminal places the second communication terminal in a hold state in a transfer, a first transmission section that transmits a connection message to which a multicast address has been provided by the provision section, and a second transmission section that transmits a transfer message to the second communication terminal and also separates it from the multicast group after a call between the first communication terminal and third communication terminal has been established; the third communication terminal has a first reception section that receives a connection message after multicast address provision transmitted from the first communication terminal, an acquisition section that acquires a multicast address provided to a received connection message, and a first establishment section that establishes a call between the third communication terminal and first communication terminal using a multicast address acquired by the acquisition section; and the second communication terminal has a disconnection section that disconnects a call receivedbymeans of multicasting when a call between the first communication terminal and third communication terminal has been established, a second reception section that receives a transfer message transmitted from the first communication terminal, and a second establishment section that stops operation of the disconnection section and establishes a call between the second communication terminal and third communication terminal based on a received transfer message.

According to yet another embodiment of the present invention, a switching system comprises a transfer source first communication terminal, a call destination second communication terminal that performs communication with the first communication terminal, a transfer destination third communication terminal that performs communication with the first communication terminal and second communication terminal, a network that connects the first communication terminal, second communication terminal, and third communication terminal, and a call control apparatus that is connected to the network and mediates communications between the first communication terminal, second communication terminal, and third communication terminal; the call control apparatus has a storage section that stores subordinate communication terminal presence information, and a first transmission section that transmits third communication terminal presence information in accordance with a request from the first communication terminal; the first communication terminal has a request section that requests third communication terminal presence information from the call control apparatus when the first communication terminal places the second communication terminal in a hold state in a transfer, a first reception section that receives third communication terminal presence information transmitted from the call control apparatus, and a second transmission section that transmits a transfer message containing second communication terminal destination information to the third communication terminal based on received presence information; and the third communication terminal has a second reception section that receives a transfer message transmitted from the first communication terminal, and an establishment section that transmits a connection message to the second communication terminal and establishes a call between the third communication terminal and second communication terminal based on second communication terminal destination information contained in a received transfer message.

According to yet another embodiment of the present invention, a switching system comprises a transfer source first communication terminal, a call destination second communication terminal that performs communication with the first communication terminal, a transfer destination third communication terminal that performs communication with the first communication terminal and second communication terminal, a network that connects the first communication terminal, second communication terminal, and third communication terminal, and a switch apparatus that is connected to the network, relays data from the first communication terminal, and sends that data to the second communication terminal and third communication terminal; and the switch apparatus has a path information storage section that stores the distribution destination of a control message transmitted/received between communication terminals as switching destination path information, and a switching section that switches the path between the switch apparatus and second communication terminal to a path between the switch apparatus and third communication terminal based on path information stored in the storage section in a transfer.

### Brief Description of Drawings

FIG.1 is a block diagram showing the configuration of a hold system according to Conventional Art Example 1;
FIG.2 is a block diagram showing the configuration of a hold system according to Conventional Art Example 2;
FIG. 3 is a sequence diagram showing hold and transfer operations of a switching system according to Conventional Art Example 3;
FIG.4 is a block diagram showing the configuration of a switching system according to Embodiment 1 of the present invention;
FIG. 5 is a sequence diagram showing a hold operation between communication terminals according to Embodiment 1 of the present invention;
FIG.6 is a block diagram showing the configuration of a switching system according to Embodiment 2 of the present invention;
FIG. 7 is a format diagram showing the data structure of a hold message according to Embodiment 2 of the present invention;
FIG. 8 is a sequence diagram showing a hold operation between communication terminals according to Embodiment 2 of the present invention;
FIG. 9 is a sequence diagram showing a hold operation between communication terminals according to an exemplary modification of Embodiment 2 of the present invention;
FIG. 10 is a format diagram showing the data structure of an information message according to an exemplary modification of Embodiment 2 of the present invention;
FIG. 11 is a block diagram showing the configuration of a switching system according to Embodiment 3 of the present invention;
FIG. 12 is a format diagram showing the data structure of a hold message from a call control apparatus to a communication terminal according to Embodiment 3 of the present invention;
FIG. 13 is a format diagram showing the data structure of a terminal capability information database according to Embodiment 3 of the present invention;
FIG. 14 is a sequence diagram showing a hold operation between communication terminals according to Embodiment 3 of the present invention;
FIG. 15 is a block diagram showing the configuration of a switching system according to Embodiment 4 of the present invention;
FIG. 16 is a format diagram showing the data structure of a hold message from a call control apparatus to a communication terminal according to Embodiment 4 of the present invention;
FIG. 17 is a sequence diagram showing a hold operation between communication terminals according to Embodiment 4 of the present invention;
FIG.18 is a block diagram showing the configuration of a switching system according to Embodiment 5 of the present invention;
FIG. 19 is a format diagram showing the data structure of a connection message according to Embodiment 5 of the present invention;
FIG.20 is a sequence diagram showing a transfer operation between communication terminals according to Embodiment 5 of the present invention;
FIG.21 is a block diagram showing the configuration of a switching system according to Embodiment 6 of the present invention;
FIG.22A is a format diagram showing the data structure of a presence information request according to Embodiment 6 of the present invention;
FIG.22B is a format diagram showing the data structure of a presence information response according to Embodiment 6 of the present invention;
FIG.22C is a format diagram showing the data structure of a transfer message according to Embodiment 6 of the present invention;
FIG. 23 is a format diagram showing the data structure of a presence information database according to Embodiment 6 of the present invention;
FIG.24 is a sequence diagram showing a transfer operation between communication terminals according to Embodiment 6 of the present invention;
FIG.25 is a block diagram showing the configuration of a switching system according to Embodiment 7 of the present invention;
FIG.26A is a format diagram showing the data structure of an audio path information database according to Embodiment 7 of the present invention;
FIG.26B is a format diagram showing the data structure of an audio path information database according to Embodiment 7 of the present invention;
FIG.26C is a format diagram showing the data structure of an audio path information database according to Embodiment 7 of the present invention;
FIG. 27 is a sequence diagram showing a hold operation between communication terminals according to Embodiment 7 of the present invention; and
FIG.28 is a sequence diagram showing a transfer operation between communication terminals according to Embodiment 7 of the present invention.

### Best Mode for Carrying out the Invention

With reference now to the accompanying drawings, embodiments of the present invention will be explained in detail below. The present invention is not limited to these embodiments, and various variations and modifications may be possible without departing from the scope of the present invention.

### (Embodiment 1)

In Embodiment 1, a switching system is described in which a hold tone used in a hold operation is generated by conversion from hold tone source data.

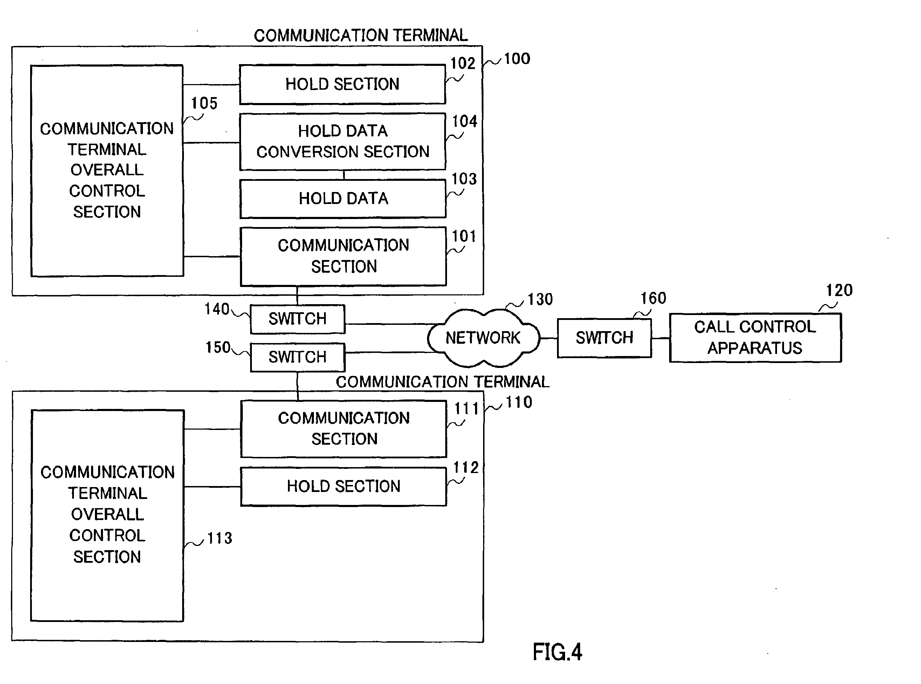

As shown in FIG.4, this switching system comprises an IP network 130 made up of an Internet network, LAN, IP-VPN or similar leased line, or the like, communication terminals 100 and 110 that are connected to IP network 130 and have telephone functions, a call control apparatus 120 that performs address analysis and executes connection between communication terminal 100 and communication terminal 110, and switches 140, 150 and 160 that relay and transmit received packets so that they are sent to the correct transmission destination.

Communication terminals 100 and 110 may be IP phones, for example. Communication terminal 100 on the side performing a hold operation comprises a communication section 101 that at least performs communication by means of packets, a hold section 102 that generates and analyzes hold messages, hold data 103 used by communication terminal 100 as a hold tone, a hold data conversion section 104 that converts hold data 103 to audio data that can be processed by the desired audio codec, and a communication terminal overall control section 105 that controls communication section 101, hold section 102, and hold data conversion section 104.

Hold data 103 may be audio data or text data, for example. When hold data 103 is audio data, hold data conversion section 104 performs conversion by means of an audio codec, and when hold data 103 is text data, hold data conversion section 104 performs conversion by means of audio synthesis.

The other communication terminal 110 comprises a communication section 111 that at least performs communication by means of packets, a hold section 112 that generates and analyzes hold messages, and a communication terminal overall control section 113 that controls communication section 111 and hold section 112.

The function of each section of communication terminal 100 and communication terminal 110 is implemented by having a computer incorporated in each terminal execute processing defined by a program.

Switches 140 through 160 have a router function in accordance with the type of network 130 (LAN, the Internet, etc.), compare the transmission destination address of a received packet with an internal address table, and send the packet only to the port to which the transmission destination terminal is connected.

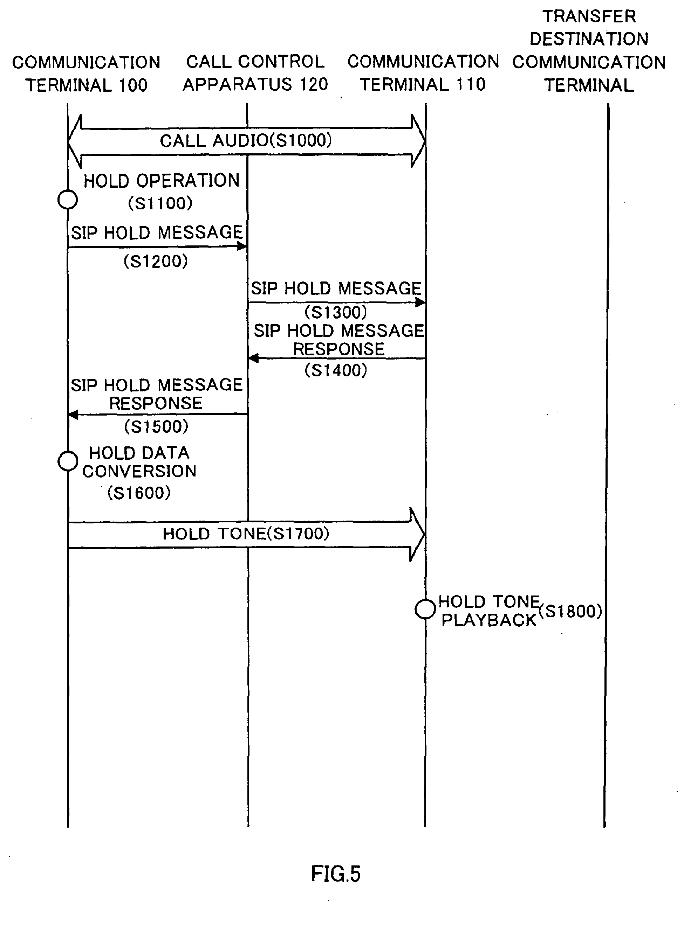

An example of a hold operation in this switching system will now be described using FIG.5.

FIG.5 shows the procedure whereby, when communication terminal 100 and communication terminal 110 are in the call state, communication terminal 100 transmits a hold message to communication terminal 110, and communication terminal 110 returns a hold message response, whereupon communication terminal 100 converts hold data 103 to audio data of the coding/decoding scheme used in the call with communication terminal 110, and transmits this hold tone to communication terminal 110. In this description, it is assumed that hold data 103 is G.711 audio data, and that messages flowing between communication terminal 100, call control apparatus 120, and communication terminal 110 are SIP (Session Initiation Protocol) messages, SIP being a protocol for performing call setup in IP telephony.

When communication terminal 100 is in a call state with communication terminal 110 (engaged in a call audio conversation) (S1000), and detects a hold operation by a user, etc. (S1100), under control of communication terminal overall control section 105 communication terminal 100 transmits an SIP hold message to call control apparatus 120 via communication section 101 (S1200). The header of this SIP hold message contains address information identifying the transmitting side and receiving side. Also, a hold command indicating that the call between communication terminal 100 and communication terminal 110 is to be placed in the hold state is included as data of this SIP hold message.

Call control apparatus 120 then receives the SIP hold message (S1200), performs address analysis, and transmits the SIP hold message to communication terminal 110 (S1300).

Then, under control of communication terminal overall control section 113, communication terminal 110 receives the hold message in communication section 111 (S1300), and transmits an SIP hold message response from hold section 112 to call control apparatus 120 via communication section 111 (S1400).

Call control apparatus 120 then receives the SIP hold message response (S1400), performs address analysis, and transmits the SIP hold message response to communication terminal 100 (S1500).

Then, under control of communication terminal overall control section 105, communication terminal 100 receives the SIP hold message response in communication section 101 (S1500), converts hold data 103, which is G.711 audio data, to audio data of the audio coding/decoding scheme used in call audio at the time of call control connection (S1000) by means of hold data conversion section 104 (S1600), and transmits the hold tone after conversion to communication terminal 110 via communication section 101 (S1700).

Under control of communication terminal overall control section 113, communication terminal 110 then receives the hold tone in communication section 111 (S1700), and performs hold tone playback using an audio device (S1800).

Thus, in a switching system according to this embodiment, the hold source communication terminal is equipped internally with a hold data conversion section that converts hold data to audio data of the desired codec, so that, by converting a hold tone to audio data of the codec used in a call, it is possible to provide the far-end terminal with a hold tone that the far-end terminal can interpret. The amount of memory necessary for this data conversion section is significantly less than the amount of memory in a conventional system provided with a number of hold tones equivalent to the number of codecs for one hold tone.

In addition, various modifications of the configuration of this embodiment are also possible, as described below.

First, in this embodiment, hold data conversion section 104 has been described as converting G.711 audio data to audio data of a codec used in call audio between communication terminal 100 and communication terminal 110, but operation of this embodiment is also possible in a case where hold data 103 is audio data of another codec, by having hold data conversion section 104 possess a conversion algorithm for conversion from that codec to the audio codec used in call audio between communication terminal 100 and communication terminal 110.

Secondly, it is also possible for communication terminal 100 to acquire andhold, at the time of capability exchange in call connection with communication terminal 110 or beforehand, a list of audio codecs that can be interpreted by communication terminal 110, and for hold data conversion section 104 to perform conversion to audio data of an audio codec that can be interpreted by communication terminal 110 based on this audio codec list.

Thirdly, in this embodiment, a case has been described in which hold data 103 is audio data, but operation of this embodiment is also possible when hold data 103 is text data, by having hold data conversion section 104 perform conversion to desired codec audio data by means of audio synthesis.

Furthermore, in this embodiment, a case has been described in which hold data 103 is audio data, but operation of this embodiment is also possible when hold data 103 is image data, by having hold data conversion section 104 perform conversion to desired codec image data.

In this case, with regard to desired codec image data, it is possible for communication terminal 100 to acquire and hold, at the time of capability exchange in call connection with communication terminal 110 or beforehand, a list of image codecs that can be interpreted by communication terminal 110, and for hold data conversion section 104 to perform acquisition based on this image codec list.

Fourthly, in this embodiment, the communication terminals and call control apparatuses operate via different switches when connecting to network 130, but it is also possible, with one or more communication terminals, for one or more communication terminals and call control apparatuses to be connected to network 130 via the same switch.

Fifthly, in this embodiment, a case has been described in which an SIP message is used as a hold message, but operation of this embodiment is also possible by means of another message.

Sixthly, in this embodiment, a case has been described in which communication between communication terminal 100 and communication terminal 110 is carried out via call control apparatus 120, but operation of this embodiment is also possible whereby communication terminal 100 holds the address of communication terminal 110, enabling communication to be performed between communication terminal 100 and communication terminal 110 without the intermediation of call control apparatus 120.

Seventhly, in this embodiment, a case has been described in which communication terminal 100 provides a hold tone to communication terminal 110, but operation of this embodiment is also possible by having the hold source have the same kind of configuration as communication terminal 100, and the hold destination the same kind of configuration as communication terminal 110, whatever the communication terminals.

### (Embodiment 2)

In Embodiment 2, a switching system is described in which the communication terminal side that receives provision of a hold tone converts the received hold data to a hold tone that can be interpreted.

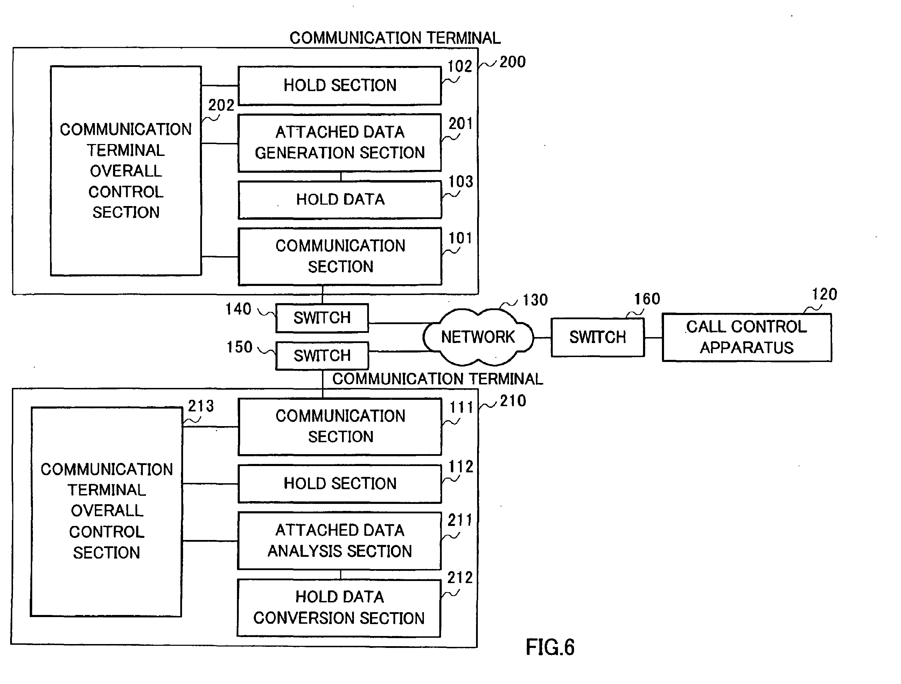

As shown in FIG.6, in this switching system a communication terminal 200 that provides a hold tone comprises an attached data generation section 201 that attaches hold data 103 to a hold message generated by a hold section 102, instead of a hold data conversion section. Also, a communication terminal 210 that receives provision of a hold tone comprises an attached data analysis section 211 that acquires hold data attached to a hold message analyzed by a hold section 112, and a hold data conversion section 212 that converts hold data acquired by attached data analysis section 211 to audio data of an audio codec supported by communication terminal 210. The rest of the configuration is the same as in Embodiment 1 (see FIG.1).

As in Embodiment 1, hold data conversion section 212 performs audio codec conversion when the attached hold data is audio data, and performs conversion by audio synthesis when the attached hold data is text data.

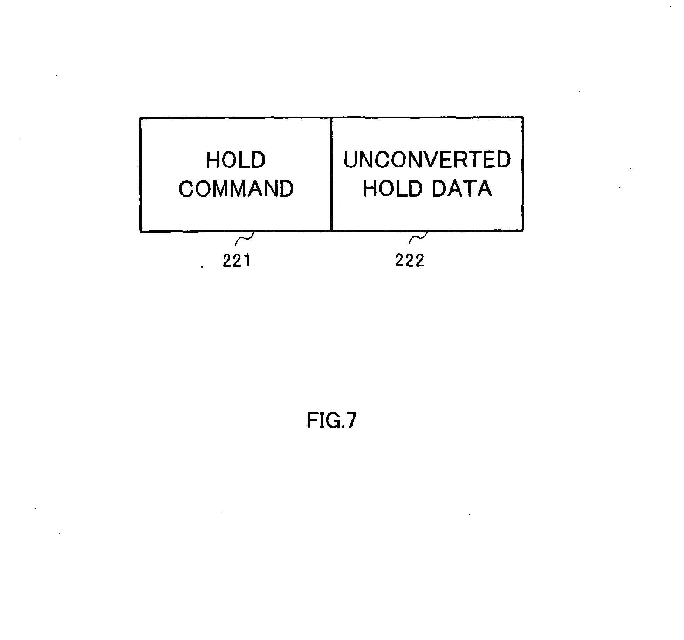

FIG.7 shows the data structure of a hold message whereby communication terminal 200 performs communication with communication terminal 210 via a call control apparatus 140. As shown in FIG.7, a hold message is composed of a hold command field 221 that indicates that a call between communication terminal 200 and communication terminal 210 is to be placed in the hold state, and an unconverted hold data field 222 in which hold data 103 in communication terminal 200 is attached. Unconverted hold data field 222 may be audio data or text data, for example.

As in Embodiment 1, the function of each section of communication terminal 200 and communication terminal 210 is implemented by having a computer incorporated in each terminal execute processing defined by a program.

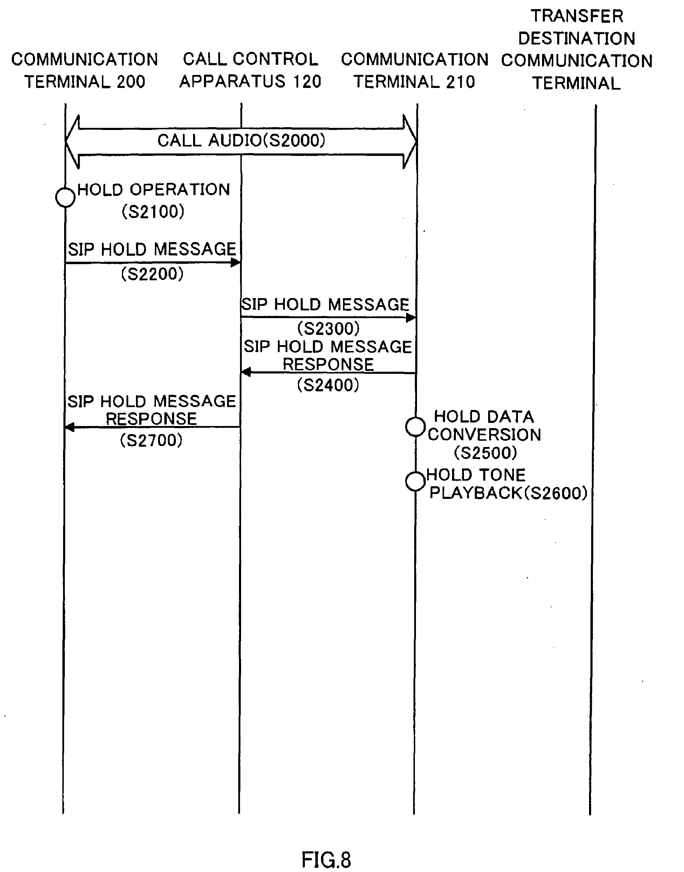

An example of a hold operation in this switching system will now be described using FIG.8. As in Embodiment 1, in this description it is assumed that hold data 103 is G.711 audio data, and that messages flowing between communication terminal 200, call control apparatus 140, and communication terminal 210 are SIP messages.

When communication terminal 200 is in a call state with communication terminal 210 (engaged in a call audio conversation) (S2000), and detects a hold operation by a user, etc. (S2100), under control of communication terminal overall control section 202 communication terminal 200 generates an SIP hold message by means of hold section 102, attaches hold data 103 to the SIP hold message by means of attached data generation section 201, and transmits the SIP hold message with hold data 103 attached (unconverted hold data field 222 composed of hold command 221 and hold data 103: see FIG.7) from hold section 102 to call control apparatus 140 via communication section 101 (S2200).

Call control apparatus 140 then receives the SIP hold message (S2200), performs address analysis, and transmits the SIP hold message to communication terminal 210 (S2300).

Then, under control of communication terminal overall control section 213, communication terminal 210 receives the SIP hold message in communication section 111 (S2300), and transmits an SIP hold message response from hold section 112 to call control apparatus 140 via communication section 111 (S2400), and also acquires hold data conversion section 212, which is G. 711 audio data, from the received SIP hold message by means of attached data analysis section 211, converts this data to desired audio data supported by communication terminal 210 by means of hold data conversion section 212 (hold data conversion) (S2500), and performs hold tone playback using an audio device (S2600).

On receiving the SIP hold message response (S2400), call control apparatus 140 performs address analysis, and transmits the SIP hold message response to communication terminal 200 (S2700).

Then, under control of communication terminal overall control section 202, communication terminal 200 receives the hold message response in communication section 101 (S2700).

Thus, in a switching system according to this embodiment, the communication terminal that provides a hold tone is equipped internally with a hold data conversion section that converts received hold data to data of an audio codec supported by itself, so that it is possible for the communication terminal that receives hold tone provision to play back a hold tone even if that communication terminal receives a hold tone that it does not support.

In addition, various modifications of the configuration of this embodiment are also possible.

Namely, in this embodiment, hold data conversion section 212 has been described as converting G.711 audio data to data of an audio codec supported by communication terminal 210, but operation of this embodiment is also possible in a case where hold data 103 is audio data of another codec, by having hold data conversion section 212 possess a conversion algorithm for conversion from that codec to an audio codec supported by communication terminal 210.

Moreover, the third, fourth, fifth, sixth, and seventh modifications shown in Embodiment 1 can also be applied to this embodiment.

However, in the case of the above third modification, if hold data 103 is image data, the following amendment is necessary.

That is to say, in this embodiment, a case has been described in which hold data 103 is audio data, but hold data 103 may also be image data. However, as the data size is larger in the case of image data than in the case of audio data, it is necessary to divide the image data when attaching it to amessage. Possible division met hods are division according to data size, and cutting at every video scene. Data division methods that can be envisaged are (1) extending attached data generation section 201 as a section that generates attached data that includes an image division function, and (2) providing a new section that performs image division. As the transmission method, a method is desirable that transmits the first divided image data attached to the hold message, and transmits the second and subsequent divided image data attached to information messages. Meanwhile, possible data playback methods are (1) extending hold data conversion section 212 of communication terminal 210 that receives image data that is hold data as a hold data conversion section that includes a function for serially playing back received image data, and (2) providing a new section that serially plays back image data.

In case (1) above, when image data is considered as hold data, the desired operation is possible by including an image division function and a function for serially playing back image data.

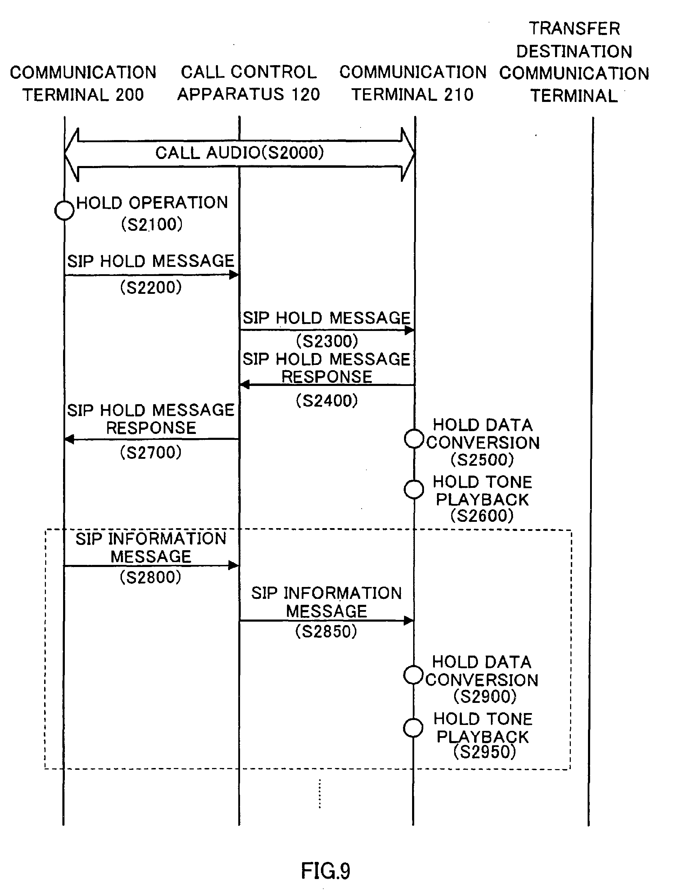

A sequence diagram for the case where hold data is image data is shown in FIG.9. In this case, as shown in FIG.9, from S2800 in FIG.8 onward, SIP information message transmission from communication terminal 200 to call control apparatus 140 (S2800), SIP information message transmission from call control apparatus 140 to communication terminal 210 (S2850), and hold data conversion by communication terminal 210 (S2900) and hold data playback by communication terminal 210 (S2950), are repeated. That is to say, the first portion of divided data is transmitted attached to the SIP hold message, and the subsequent portions are transmitted attached to information messages.

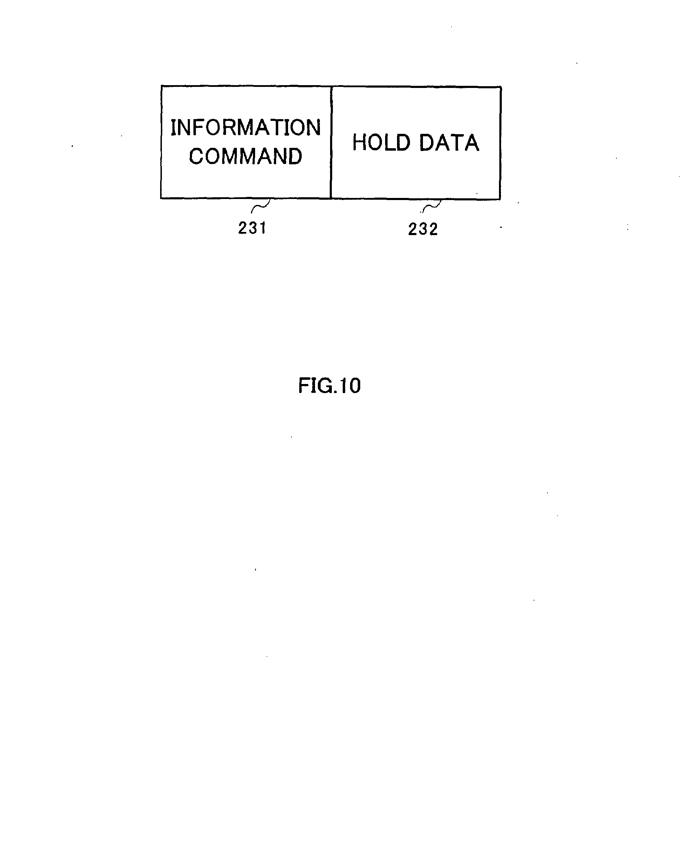

Here, an information message has the kind of data structure shown in FIG.10. As shown in FIG.10, an information message is composed of an information command field 231 and a hold data field 232. Hold data field 232 comprises divided image data.

Unlike the case of an SIP hold message (see S2400 and S2700), a response is not necessarily returned in the case of an SIP information message.

If there is sufficient memory in communication terminal 210, once an SIP information message has been stored in that memory it is not necessary for SIP information messages to be transmitted repeatedly from communication terminal 200.

### (Embodiment 3)

In Embodiment 3, a switching system is described in which a call control apparatus has a hold data conversion function.

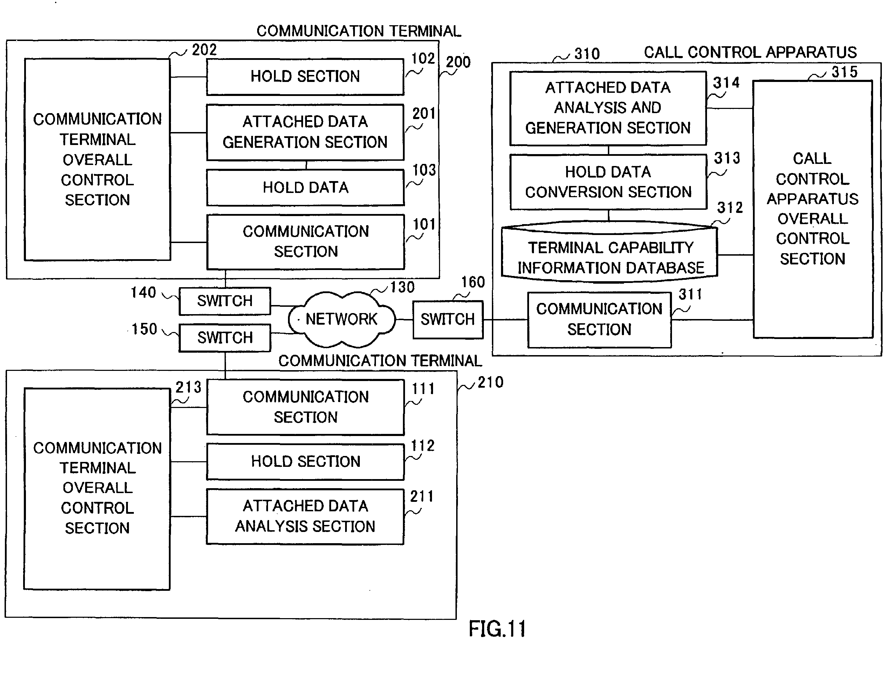

As shown in FIG. 11, in this switching system a call control apparatus 310 comprises a communication section 311 that at least performs communication by means of packets, a terminal capability information database (DB) 312 that holds information relating to interpretable codec capability in each communication terminal subordinate to call control apparatus 310, a hold data conversion section 313 that converts hold data to data of a codec supported by communication terminal 300 based on information in terminal capability information database 312, an attached data analysis and generation section 314 that acquires hold data attached to a received hold message and also generates a hold message to which audio data converted by hold data conversion section 313 is attached, and a call control apparatus overall control section 315 that controls communication section 311, terminal capability information database 312, hold data conversion section 313, and data analysis and generation section 314. A hold data conversion section is provided only in call control apparatus 310, and not in communication terminal 300. The rest of the configuration is the same as in Embodiment 2 (see FIG. 6).

The function of each section of call control apparatus 310 is implemented by having a computer incorporated in call control apparatus 310 execute processing defined by a program.

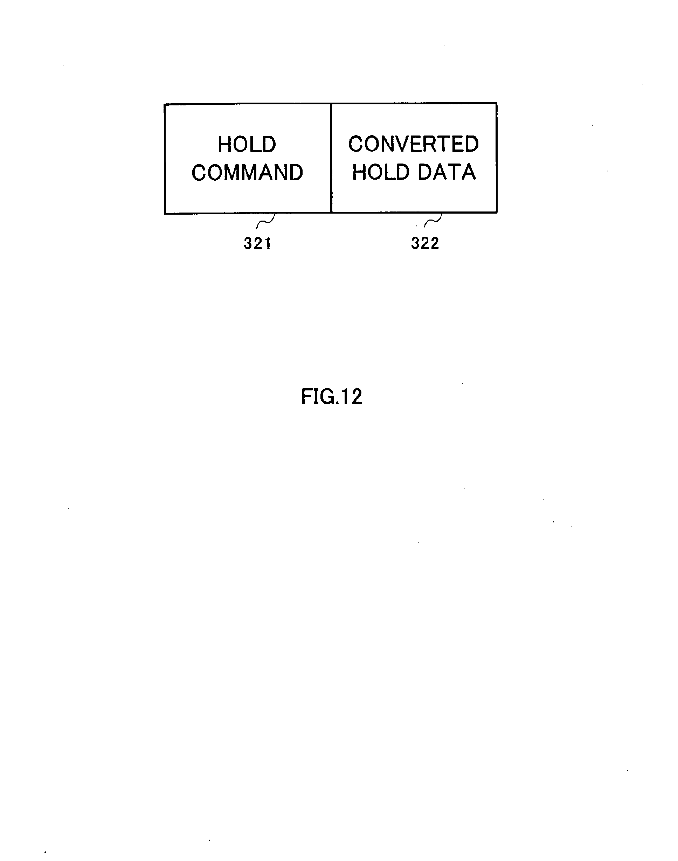

FIG.12 shows the data structure of a hold message whereby communication is performed between call control apparatus 310 and communication terminal 300. As shown in FIG.12, a hold message is composed of a hold command field 321 that indicates that a call between communication terminal 200 and communication terminal 300 is to be placed in the hold state, and a converted hold data field 322 that stores audio data converted from hold data by hold data conversion section 313 of call control apparatus 310.

The data structure of a hold message for which communication terminal 200 and communication terminal 300 perform communication is the same as that shown in FIG.7.

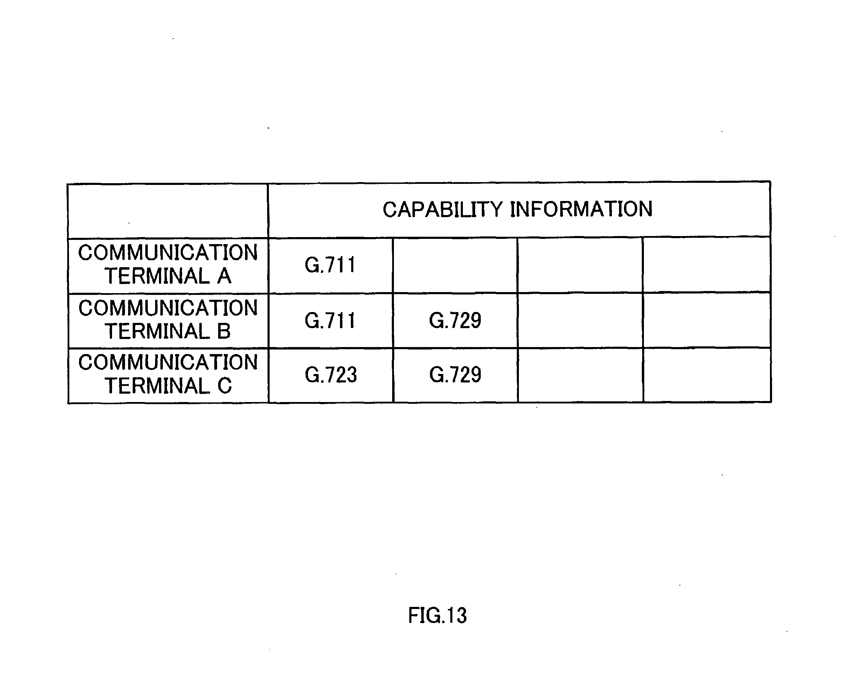

FIG.13 shows an example of the contents of terminal capability information database 312, in which audio codecs that can be interpreted by each terminal are listed as capability information.

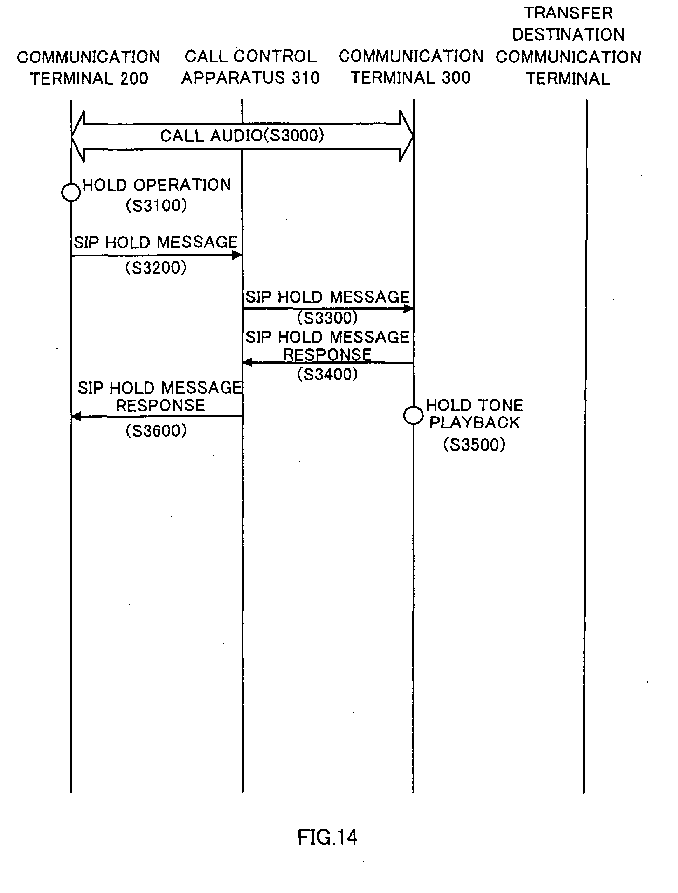

An example of a hold operation in this switching system will now be described using FIG.14.

FIG.14 shows the procedure whereby, when communication terminal 200 and communication terminal 300 are in the call state, communication terminal 200 transmits a hold message with hold data 103 attached to call control apparatus 310, and call control apparatus 310 converts the attached hold data to audio codec data that can be interpreted by communication terminal 300 and transmits a hold message with this converted hold data attached to communication terminal 300. As in Embodiment 1, in this description it is assumed that hold data 103 is G.711 audio data, and that messages flowing between communication terminal 200, call control apparatus 310, and communication terminal 300 are SIP messages.

When communication terminal 200 is in a call state with communication terminal 300 (engaged in a call audio conversation) (S3000), and detects a hold operation by a user, etc., (S3100), under control of communication terminal overall control section 202 communication terminal 200 generates a hold message by means of hold section 102, attaches hold data 103 to the SIP hold message by means of attached data generation section 201, and transmits the SIP hold message with hold data 103 attached (unconverted hold data 222 composed of hold command 221 and hold data 103: see FIG.7) from hold section 102 to call control apparatus 310 via communication section 101 (S3200).

Then, in call control apparatus 310, under control of call control apparatus overall control section 315, communication section 311 receives the SIP hold message (S3200), attached data analysis and generation section 314 acquires unconverted hold data 222, which is G.711 audio, from that SIP hold message, hold data conversion section 313 converts the unconverted hold data 222 to audio codec data that can be interpreted by communication terminal 300 (converted hold data 322) based on capability information in terminal capability information database 312 (see FIG.13), and attached data analysis and generation section 314 generates an SIP hold message (hold command 321 and converted hold data 322: see FIG.12), and transmits this SIP hold message to communication terminal 300 via communication section 311 (S3300).

Then, under control of communication terminal overall control section 301, communication terminal 300 receives the SIP hold message in communication section 111 (S3300), and transmits an SIP hold message response from hold section 112 to call control apparatus 310 via communication section 111 (S3400). Communication terminal 300 also acquires converted hold data 322 from the received SIP hold message by means of attached data analysis section 211, and performs hold tone playback (S3500).

In call control apparatus 310, under control of call control apparatus overall control section 315, communication section 311 receives the SIP hold message response (S3400), and attached data analysis and generation section 314 transmits the SIP hold message response to communication terminal 200 via communication section 311 (S3600).

Then, under control of communication terminal overall control section 202, communication terminal 200 receives the SIP hold message response in communication section 101 (S3600).

Terminal capability registration in terminal capability information database 312 may be performed at the time of communication terminal initialization (SIP registration) , or at the time of capability exchange in call connection between communication terminals.

Thus, in a switching system according to this embodiment, a call control apparatus is equipped internally with a hold destination communication terminal capability information database, and is also equipped with a hold data conversion section that converts hold data received from a hold source communication terminal to audio codec data that can be interpreted by the hold destination communication terminal based on information registered in this terminal capability information database, making it possible for the hold destination communication terminal to play back a hold tone without having a variety of conversion sections for each audio codec.

In addition, various modifications of the configuration of this embodiment are also possible.

Namely, in this embodiment, a case has been described in which communication terminal 200 provides a hold tone to communication terminal 300, but operation of this embodiment is also possible by having the hold source have the same kind of configuration as communication terminal 200, having the hold destination have the same kind of configuration as communication terminal 300, and having the call control apparatus have the same kind of configuration as call control apparatus 310, whatever the communication terminals.

Moreover, the various modifications shown in Embodiment 2 can also be applied to this embodiment.

### (Embodiment 4)

In Embodiment 4, a switching system is described in which a call control apparatus provides a hold tone toapluralityofcommunicationterminalssimultaneously.

In this switching system, a call control apparatus constantly distributes hold data to only a specific group on a network by means of multicasting whereby one-to-multiple communication is carried out. A hold source communication terminal, on the other hand, sends a hold message to a hold destination communication terminal, and on receiving this the hold destination communication terminal enters into the multicast group and acquires hold data from the call control apparatus.

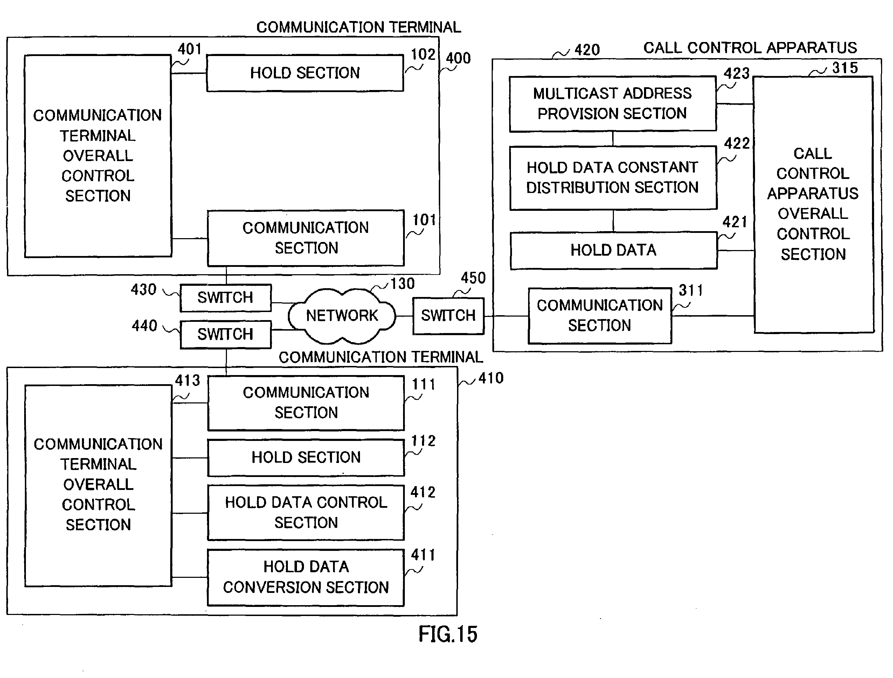

As shown in FIG.15, in this switching system a hold source communication terminal 400 comprises a communication section 101, hold section 102, and communication terminal overall control section 401; a hold destination communication terminal 410 comprises a communication section 111, hold section 112, hold data conversion section 411, hold data control section 412 that performs connection to hold data being constantly distributed by means of multicasting by a call control apparatus 420, and a communication terminal overall control section 413 that controls each section of hold destination communication terminal 410; and call control apparatus 420 comprises a communication section 311, hold data 421, a hold data constant distribution section 422 that transmits a hold tone constantly by means of multicasting, a multicast address provision section 423 that provides a multicast address being used by hold data constant distribution section 422 to a received hold message, and a call control apparatus overall control section 424 that controls each section of call control apparatus 420. Switches 430, 440, and 450 are multicast-supporting switches. The rest of the configuration is the same as in Embodiment 1 (see FIG.4).

The function of each section of communication terminals 400 and 401, and call control apparatus 420, is implemented by having a computer incorporated in each apparatus execute processing defined by a program.

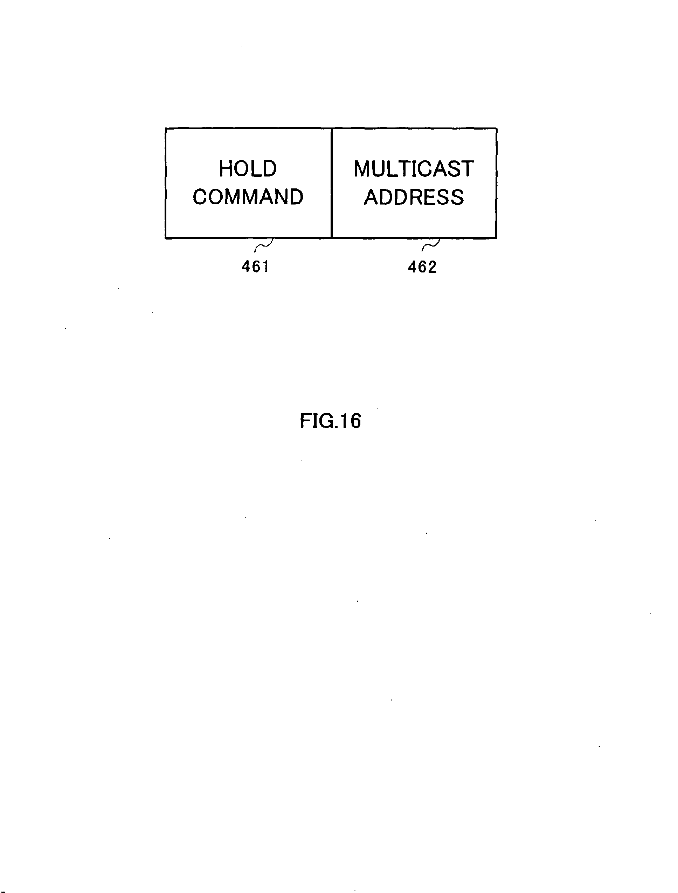

FIG.16 shows the data structure of a hold message whereby communication is performed between call control apparatus 420 and communication terminal 410. As shown in FIG.16, a hold message is composed of a hold command field 461 that indicates that a call between communication terminal 400 and communication terminal 410 is to be placed in the hold state, and a multicast address field 462 that indicates the hold data multicast address being used by hold data constant distribution section 422. Provision of the hold data multicast address to this multicast address field 462 is performed by multicast address provision section 423.

Although not shown in the drawings, the data structure of a hold message whereby communication terminal 400 and call control apparatus 420 perform communication comprises a hold command only.

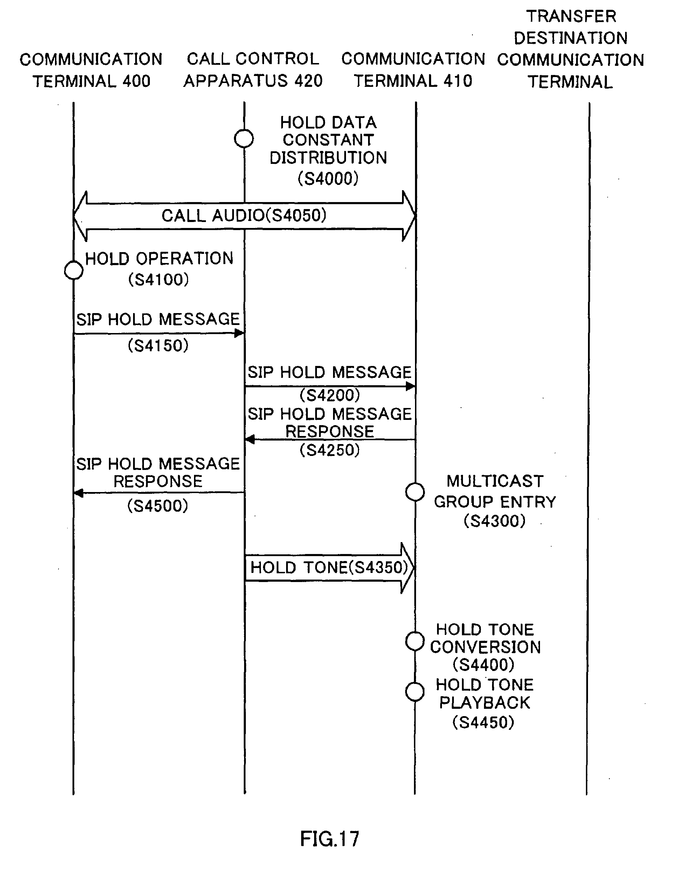

An example of a hold operation in this switching system will now be described using FIG.17.

FIG.17 shows the sequence whereby communication terminal 400 transmits a hold message to communication terminal 410 engaged in a call while call control apparatus 420 is constantly distributing hold data to at least all ports of switch 440 by means of multicasting. As in Embodiment 1, in this description it is assumed that hold data 421 is G.711 audio data, and that messages flowing between communication terminal 400, call control apparatus 420, and communication terminal 410 are SIP messages.

Call control apparatus 420 constantly distributes hold data (G.711 audio) by means of hold data constant distribution section 422 (hold data constant distribution) (S4000).

When communication terminal 400 is in a call state with communication terminal 410 (engaged in a call audio conversation) (S4050), and detects a hold operation by a user, etc. (S4100), under control of communication terminal overall control section 401 communication terminal 400 transmits an SIP holdmessage to call control apparatus 420 via communication section 101 by means of hold section 102 (S4150).

Then, in call control apparatus 420, under control of call control apparatus overall control section 424, communication section 311 receives the SIP hold message (S4150), multicast address provision section 423 provides hold data multicast address 462 to that SIP hold message, and communication section 311 transmits the SIP hold message (hold command 461 and multicast address 462: see FIG.16) to communication terminal 410 (S4200).

Then, in communication terminal 410, under control of communication terminal overall control section 413 communication section 111 receives the SIP hold message (S4200), and hold section 112 transmits an SIP hold message response to call control apparatus 420 using communication section 111 (S4250).

Communication terminal 410 then acquires hold data multicast address 462 from the received SIP hold message by means of hold data control section 412 and enters into the hold data multicast group (reports reception preparation completion to switch 440) (S4300), receives hold data constantly distributed from call control apparatus 420 (S4350) in communication section 111, converts this hold data to audio codec data that can be interpreted by communication terminal 410 by means of hold data conversion section 411 (hold tone conversion) (S4400), and performs hold tone playback by means of an audio device (S4450).

Under control of call control apparatus overall control section 424, call control apparatus 420 receives the hold message response in communication section 311 (S4250), and transmits an SIP hold message response to communication terminal 400 (S4500).

Then, under control of communication terminal overall control section 401, communication terminal 400 receives the hold message response in communication section 101 (S4500).

Thus, in a switching system according to this embodiment, a call control apparatus is equipped internally with a hold data constant distribution section that constantly distributes hold data by means of multicasting, and a multicast address provision section that provides the multicast address to a hold message received from a hold source communication terminal; and a hold destination communication terminal comprises a hold data control section that acquires a multicast address from a hold message received from the call control apparatus, enters into the multicast group, and can receive hold data, and a hold data conversion section that converts hold data to interpretable codec data; by means of which configuration it is possible for the call control apparatus to provide a hold tone simultaneously to a plurality of terminals without providing a plurality of audio paths.

In addition, various modifications of the configuration of this embodiment are also possible.

Namely, in this embodiment, a case has been described in which call control apparatus 420 reports a multicast address to communication terminal 410, but it is also possible for hold source communication terminal 400 to specify the multicast address, and report it to hold destination communication terminal 410, or for hold destination communication terminal 410 to hold the hold data multicast address beforehand.

Moreover, the various modifications shown in Embodiment 2 can also be applied to this embodiment.

### (Embodiment 5)

In Embodiment 5, a switching system is described in which hold and transfer are performed on one audio path using multicasting.

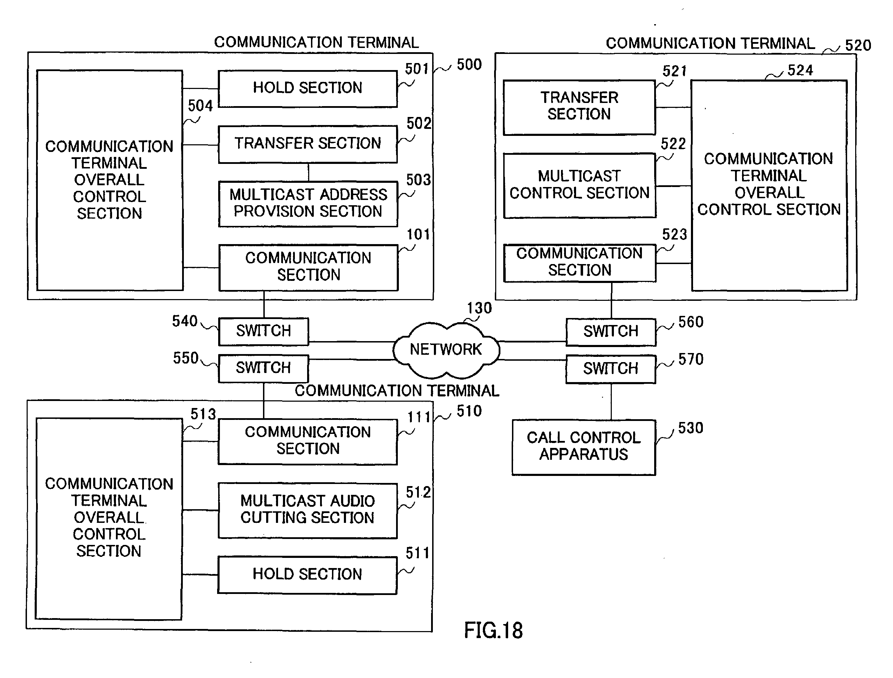

In this switching system, as shown in FIG.18, there are connected to a network 130 a transfer source communication terminal 500 that holds and transfers a call with the call destination, a transfer destination communication terminal 520 to which a call is transferred from transfer source communication terminal 500, and a call destination communication terminal 510 for which a call is transferred from transfer source communication terminal 500 to transfer destination communication terminal 520.

Transfer source communication terminal 500 comprises a hold section 501 composed of hold section 102, hold data 103, and attached data generation section 201 shown in FIG.6, a transfer section 502 that generates and analyzes messages (connection messages and transfer messages) in transfers, a multicast address provision section 503 that provides a multicast address used in an audio call between communication terminal 500 and communication terminal 510 to a connection message, a communication section 101 that at least performs communication by means of packets, and a communication terminal overall control section 504 that controls each section of communication terminal 500.

Transfer destination communication terminal 520 comprises a transfer section 521 that generates and analyzes messages in transfers, a multicast control section 522 that acquires a multicast address from a connection message and performs processing such as entry into a multicast group, a communication section 523, and a communication terminal overall control section 524 that controls each section of communication terminal 520.

Call destination communication terminal 510 comprises a hold section 511 composed of hold section 112, attached data analysis section 211, and hold data conversion section 212 shown in FIG.6, a multicast audio cutting section 512 that eliminates audio of an audio call by means of multicasting between communication terminal 500 and communication terminal 520 in a transfer, a communication section 111, and a communication terminal overall control section 513 that controls each section of communication terminal 510.

The rest of the configuration is the same as in Embodiment 1 (see FIG.4).

The function of each section of communication terminals 500, 510, and 520 is implemented by having a computer incorporated in each communication terminal execute processing defined by a program.

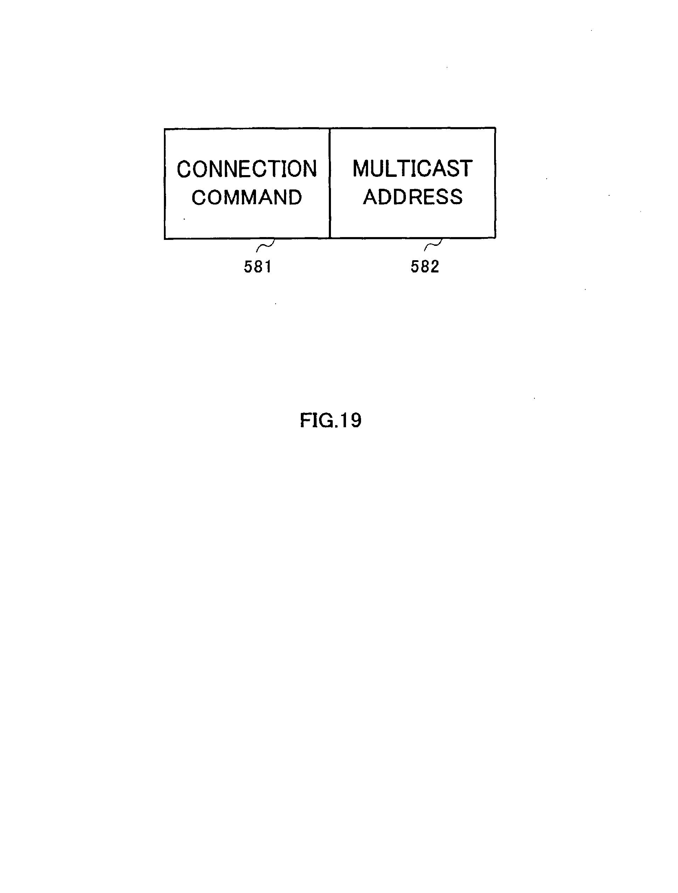

FIG.19 shows the data structure of a connection message whereby transfer source communication terminal 500 performs communication with transfer destination communication terminal 520 via a call control apparatus 530. As shown in FIG. 19, a connection message is composed of a connection command field 581 that indicates that a call between communication terminal 500 and communication terminal 520 is to be placed in the connection state, and a multicast address 582 being used in a call between communication terminal 500 and communication terminal 510.

Although not shown in the drawings, a transfer message whereby communication terminal 500 performs communication with communication terminal 510 via call control apparatus 530 contains only information indicating the possibility of transfer.

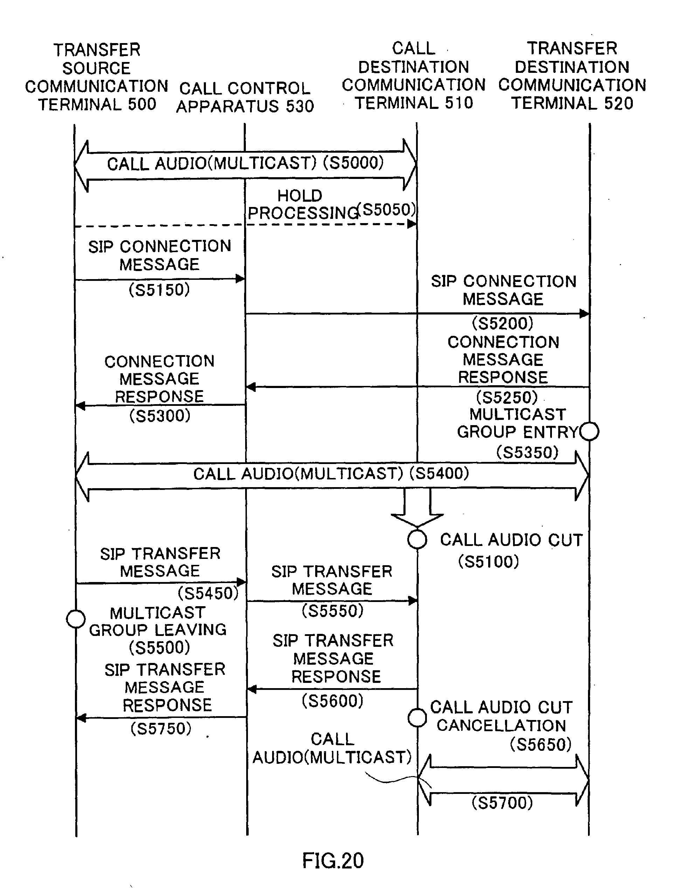

An example of a transfer operation in this switching system will now be described using FIG.20.

FIG.20 shows the sequence whereby, while communication terminal 500 and communication terminal 510 are in a call state using multicasting (engaged in audio transmission to all ports of switches 540 through 570), communication terminal 500 puts the call with communication terminal 510 on hold, and sends a transfer request to transfer destination communication terminal 520 by means of conversation, and up to the point at which a call between call destination communication terminal 510 and transfer destination communication terminal 520 is established. In this description it is assumed that messages flowing between the communication terminals via call control apparatus 530 are SIP messages.

When in a call state (engaged in an audio call) with communication terminal 510 using multicasting (S5000), communication terminal 500 performs hold processing with hold section 511 of communication terminal 510 by means of hold section 501 (S5050). A detailed description of the hold processing was given in Embodiment 2, and will therefore be omitted here.

Communication terminal 510 then enters the hold state and generates a hold tone, and multicast audio cutting section 512 starts call audio cutting that reaches the multicasting audio path used in the call with communication terminal 500 (S5100).

Under control of communication terminal overall control section 504, and using transfer section 502 and multicast address provision section 503, communication terminal 500 generates an SIP connection message to which is attached the multicast address used in the call with communication terminal 510 (connection command 581 and multicast address 582: see FIG.19), and transmits this SIP connection message to call control apparatus 530 by means of communication section 101 (S5150).

Call control apparatus 530 then receives the SIP connection message (S5150), performs address analysis, and transmits the SIP connection message to communication terminal 520 (S5200).

Then, under control of communication terminal overall control section 524, communication terminal 520 receives the SIP connection message in communication section 523 (S5200), and transmits an SIP connection message response from transfer section 521 to call control apparatus 530 via communication section 523 (S5250).

Call control apparatus 530 then receives the SIP connection message response (S5250), performs address analysis, and transmits the SIP connection message response to communication terminal 500 (S5300).

Under control of communication terminal overall control section 504, communication terminal 500 then receives the SIP connection message response in communication section 101 (S5300).

Meanwhile, on receiving an SIP connection message (S5200), communication terminal 520 acquires multicast address 582 from the received SIP connection message by means of multicast control section 522, enters into the multicast group (S5250), and starts a call (call audio) (S5400) with communication terminal 500, which received the SIP connection message response (S5300).

In this call, a transfer request is sent from communication terminal 500 to communication terminal 520. This conversation is not conveyed to communication terminal 510, which is in the call audio cut state (S5100).

Then, under control of communication terminal overall control section 504, communication terminal 500 generates an SIP transfer message by means of transfer section 502 and transmits this SIP transfer message to call control apparatus 530 via communication section 101 (S5450), and also leaves the multicast group (S5500) and cuts the audio call that is using multicasting.

Call control apparatus 530 then receives the SIP transfer message (S5450), and transmits the SIP transfer message to communication terminal 510 (S5550).

Under control of communication terminal overall control section 513, communication terminal 510 receives the SIP transfer message in communication section 111 (S5550), and transmits an SIP transfer message response to call control apparatus 530 (S5600). Communication terminal 510 also cancels the call audio cutting being performed by multicast audio cutting section 512 (S5650), and starts an audio call (call audio) using multicasting.

Meanwhile, call control apparatus 530 receives the SIP transfer message response (S5600), and transmits the SIP transfer message response to communication terminal 500 (S5750).

Under control of communication terminal overall control section 504, communication terminal 500 then receives the SIP transfer message response in communication section 101 (S5750).

Thus, in a switching system according to this embodiment, multicasting is used in an audio path, a transfer source communication terminal is equipped with a multicast address provision section that provides a multicast address to a connection message, a transfer destination communication terminal is equipped with a multicast control section that acquires a multicast address from a connection message and enters into the multicast group, and a call destination communication terminal is equipped with a multicast audio cutting section that cuts call audio between the transfer source communication terminal and transfer destination communication terminal. According to this configuration, it is possible for hold and transfer to be carried out on one audio path for the three communication terminals involved in the hold and transfer. As a result, the load imposed on audio path control and buffer control can be greatly alleviated compared with a conventional system in which two audio paths are necessary.

In addition, various modifications of this embodiment are also possible.

Namely, in this embodiment, a case has been described in which SIP messages are used as hold messages, but operation of this embodiment is also possible by means of other messages.

Also, in this embodiment, a case has been described in which hold processing between communication terminal 500 and communication terminal 510 is carried out in the same way as in Embodiment 2, but it is also possible to perform the hold processing shown in Embodiment 3, and any hold processing may be used as long as it is hold processing that produces a hold tone in communication terminal 510.

Moreover, in this embodiment, communication terminal 500 reports a multicast address to communication terminal 520, but it is also possible for the call control apparatus to perform blanket multicast address management, and for the call control apparatus to report the multicast address to communication terminal 520 by providing the multicast address in a connection message transmitted from communication terminal 500 to communication terminal 520 via the call control apparatus.

Furthermore, in this embodiment, a case has been described in which a call between communication terminals is carried out via call control apparatus 530, but it is also possible for each communication terminal to hold two other communication terminal addresses, and for communication between communication terminals to be carried out without the intervention of call control apparatus 530.

Also, in this embodiment, a case has been described in which transfer is performed from a call between communication terminal 500 and communication terminal 510 to a call between communication terminal 510 and communication terminal 520, but operation of this embodiment is also possible by having the transfer source have the same kind of configuration as communication terminal 500, the transfer destination have the same kind of configuration as communication terminal 520, and the call destination have the same kind of configuration as communication terminal 510, whatever the communication terminals.

Moreover, the fourth modification shown in Embodiment 1 can also be applied to this embodiment.

### (Embodiment 6)

In Embodiment 6, a switching system is described in which hold and transfer are performed without a conversation being carried out between the transfer source user and transfer destination user.

In this switching system, presence information indicating whether or not transfer telephone call reception is possible is registered in a call control apparatus, and transfer processing is carried out based on this presence information.

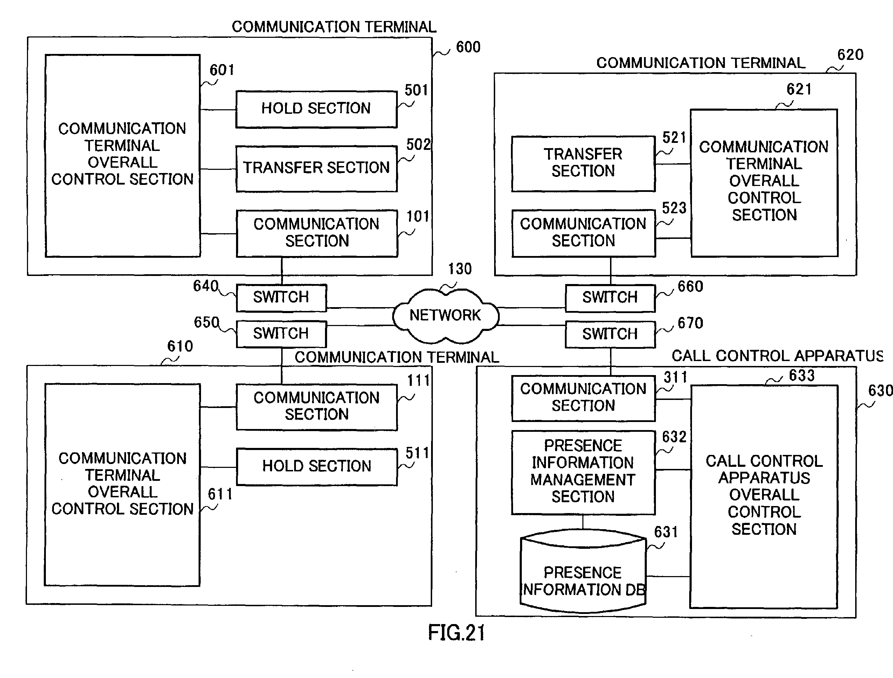

As shown in FIG.21, transfer source communication terminal 600 of this switching system comprises a hold section 501, transfer section 502, communication section 101, and communication terminal overall control section 601; transfer destination communication terminal 620 comprises a transfer section 521, communication section 523, and communication terminal overall control section 621; and call destination communication terminal 610 comprises a hold section 511, communication section 111, and communication terminal overall control section 611. Also, call control apparatus 630 comprises a communication section 311 that at least performs communication by means of packets, a presence information database 631 that stores presence information of all users using communication terminals subordinate to call control apparatus 630, a presence information management section 632 that manages presence information database 631, and a call control apparatus overall control section 633 that controls each section of call control apparatus 630. The rest of the configuration is the same as in Embodiment 1 (see FIG.4).

The function of each section of communication terminals 600, 610, and 620, and call control apparatus 630, is implemented by having a computer incorporated in each apparatus execute processing defined by a program.

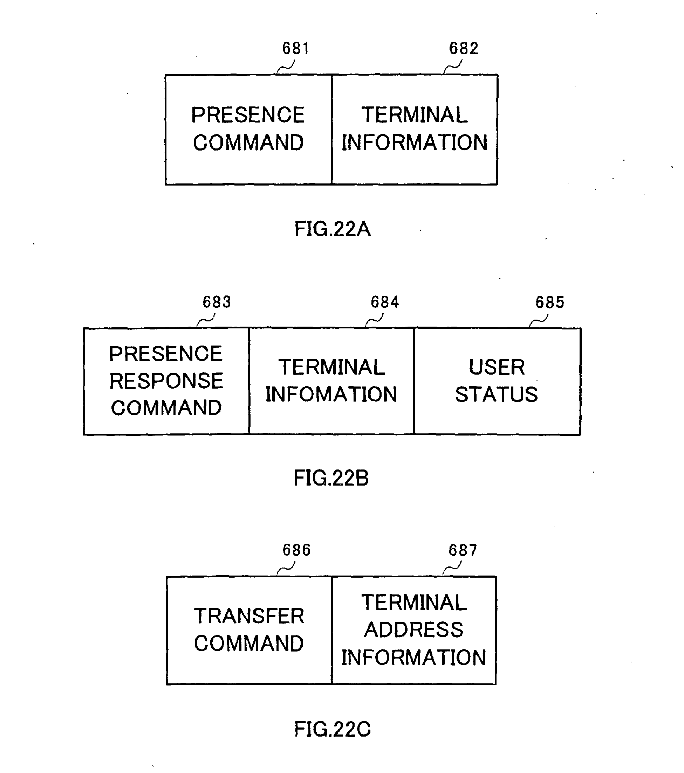

In this switching system, in a transfer operation, transfer source communication terminal 600 sends call control apparatus 630 a presence information request to ask for presence information for transfer destination communication terminal 620. The data structure of this presence information request may comprise, for example, as shown in FIG.22A, a presence command field 681 indicating a presence information request message to call control apparatus 630 from communication terminal 600, and a terminal information field 682 indicating a terminal ID necessary for communication terminal 600 to obtain presence information.

In response to this, call control apparatus 630 sends communication terminal 600 a presence information request response. The data structure of this presence information request response may comprise, for example, as shown in FIG. 22B, a presence response command field 683 indicating a presence information request response message to communication terminal 600 from call control apparatus 630, a terminal information field 684 indicating a terminal ID necessary for communication terminal 600 to obtain presence information, and a user status field 685 indicating the status of the user using the terminal indicated by terminal information field 684.

Also, when the status of the transfer source user is "transfer telephone call reception possible", transfer message information indicating a transfer request is sent from communication terminal 600 to transfer destination communication terminal 620 via call control apparatus 630. The data structure of this transfer message information may comprise, for example, as shown in FIG.22C, a transfer command field 686 indicating that communication terminal 600 is making a request for a transfer of communication terminal 610 to communication terminal 620, and terminal address information 687 that stores the address of communication terminal 610 to which communication terminal 620 is making a call.

Although not shown in the drawings, a connection message exchanged between communication terminal 610 and communication terminal 620 comprises only a connection command indicating that a call between these communication terminals is to be placed in the connection state.

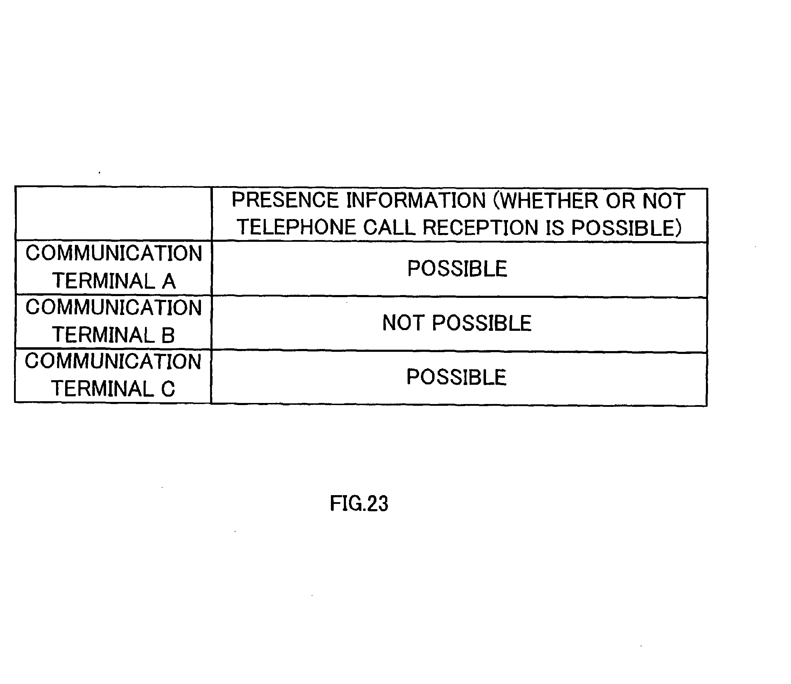

FIG.23 shows an example of the contents of presence information database 631. Presence information is information indicating the current possibility or otherwise of telephone call reception by the user of each communication terminal. Presence information is acquired by means of, for example, telephone on/off status, user manual input, login/logout status, and so forth.

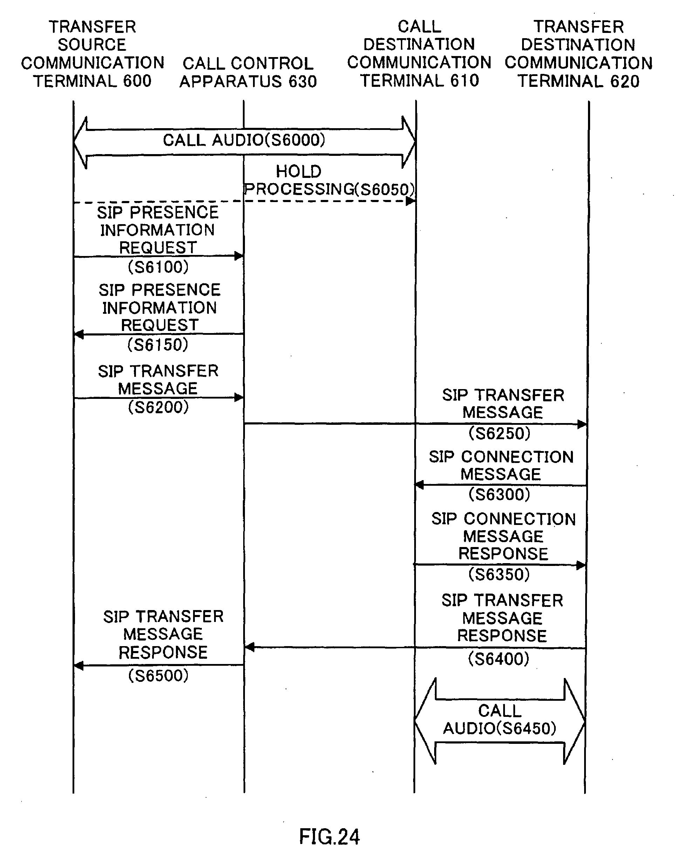

An example of a hold and transfer operation in this switching system will now be described using FIG.24.

FIG.24 shows the procedure whereby, while in a call state with communication terminal 610, communication terminal 600 puts that call on hold, confirms by means of presence information that transfer destination communication terminal 620 can respond to a telephone call, and then transfers the call to communication terminal 620. In this description it is assumed that messages flowing between the communication terminals via call control apparatus 630 are SIP messages.

When in a call state (engaged in an audio call) with communication terminal 610 (S6000), communication terminal 600 performs hold processing with hold section 511 of communication terminal 610 by means of hold section 501 (S6050). A detailed description of the hold processing was given in Embodiment 2, and will therefore be omitted here.

Under control of communication terminal overall control section 601, communication terminal 600 then transmits an SIP presence information request with transfer destination communication terminal 620 information (terminal information 682) attached (presence command 681 and terminal information 682) from transfer section 502 to call control apparatus 630 via communication section 101 (S6100).

Then, in call control apparatus 630, under control of call control apparatus overall control section 633, communication section 311 receives the SIP presence information request (S6100), presence information management section 632 acquires terminal information 682 indicating communication terminal 620 from the SIP presence information request (see FIG.22A), acquires communication terminal 620 user status 685 from presence information in presence information database 631 (see FIG.23), and transmits this to communication terminal 600 as an SIP presence information response (presence response command 683, terminal information 684, and user status 685: see FIG.22B) by means of communication section 311.

In communication terminal 600, under control of communication terminal overall control section 601, communication section 101 then receives the SIP presence information response (S6150), and transfer section 502 ascertains the possibility of transfer to communication terminal 620 from user status 685, and transmits an SIP transfer message with communication terminal 610 information attached (transfer command 686 and terminal address information 687: see FIG.22C) to call control apparatus 630 via communication section 101 (S6200).

Under control of call control apparatus overall control section 633, call control apparatus 630 then receives the SIP transfer message in communication section 311 (S6200), performs address analysis, and transmits the SIP transfer message to communication terminal 620 (S6250).

Then, in communication terminal 620, under control of communication terminal overall control section 621, communication section 523 receives the SIP transfer message (S6250), transfer section 521 acquires the terminal address of communication terminal 610 from terminal address information 687 in the SIP transfer message, and an SIP connection message is transmitted by communication section 523 to communication terminal 610 via call control apparatus 630.

Under control of communication terminal overall control section 611, communication terminal 610 then receives the SIP connection message in communication section 111 (S6300), and transmits an SIP connection message response according to the contents of the SIP connection message to communication terminal 620 via call control apparatus 630 (S6350).

Then, in communication terminal 620, under control of communication terminal overall control section 621, communication section 523 receives the SIP connection message response (S6350), and if it is ascertained that communication terminal 610 and communication terminal 520 can be connected normally, transfer section 621 transmits the SIP transfer message response to call control apparatus 630 by means of communication section 523 (S6400), and starts a call (call audio) with communication terminal 610 (S6450).

Under control of call control apparatus overall control section 633, call control apparatus 630 receives the SIP transfer message response in communication section 311 (S6400), performs address analysis, and transmits the SIP transfer message response to communication terminal 600 (S6500).

Then, under control of communication terminal overall control section 601, communication terminal 600 receives the SIP transfer message response in communication section 101 (S6500).

Registration of presence information in presence information database 631 may be performed when a user changes the response possible/impossible status of the communication terminal he or she is using, for example, by registering the status change in call control apparatus 630 from the communication terminal. This registration processing can be carried out within the scope of the SIP message protocol, and will not be specifically referred to here.

Thus, in a switching system according to this embodiment, a call control apparatus comprises a presence information database storing presence information as to the possibility of telephone call response for all users using subordinate communication terminals, and a presence information management section that manages the presence information, thereby enabling a transfer source communication terminal to ascertain the status of the transfer destination by requesting transfer destination presence information from the call control apparatus. As a result, it is possible for hold and transfer operations to be carried out without an audio conversation being conducted between the user of the transfer source communication terminal and the user of the transfer destination communication terminal.

In addition, various modifications of this embodiment are also possible.

Namely, in this embodiment, a case has been described in which SIP messages are used as transfer messages, but operation of this embodiment is also possible by means of other messages.

Also, in this embodiment, a case has been described in which transfer is performed from a call between communication terminal 600 and communication terminal 610 to a call between communication terminal 610 and communication terminal 620, but operation of this embodiment is also possible by having the transfer source have the same kind of configuration as communication terminal 620, and the call destination have the same kind of configuration as communication terminal 610, whatever the communication terminals.

Moreover, the fourth modification shown in Embodiment 1 can also be applied to this embodiment.

### (Embodiment 7)

In Embodiment 7, a switching system is described in which, when a call from a communication terminal A to a communication terminal B subordinate to a switch is transferred to another communication terminal C subordinate to the switch, the transfer is implemented by the switch switching the audio path between subordinate communication terminals.

Normally, when communication terminal A and communication terminal B exchange audio data via an IP network, communication terminal A specifies the IP address of communication terminal B (or vice versa), and audio exchange is performed directly on a Peer to Peer basis. Therefore, in order to switch a call between communication terminal A and communication terminal B to a call between communication terminal A and communication terminal C, an operation whereby communication terminal A switches the audio path from communication terminal B to communication terminal C is necessary.

In a switching system according to this embodiment, the switch switches the audio path between the switch and communication terminal B to an audio path between the switch and communication terminal C while leaving the audio path between communication terminal A and the switch as it is. Therefore, communication terminal A requires no audio path change operation whatever.

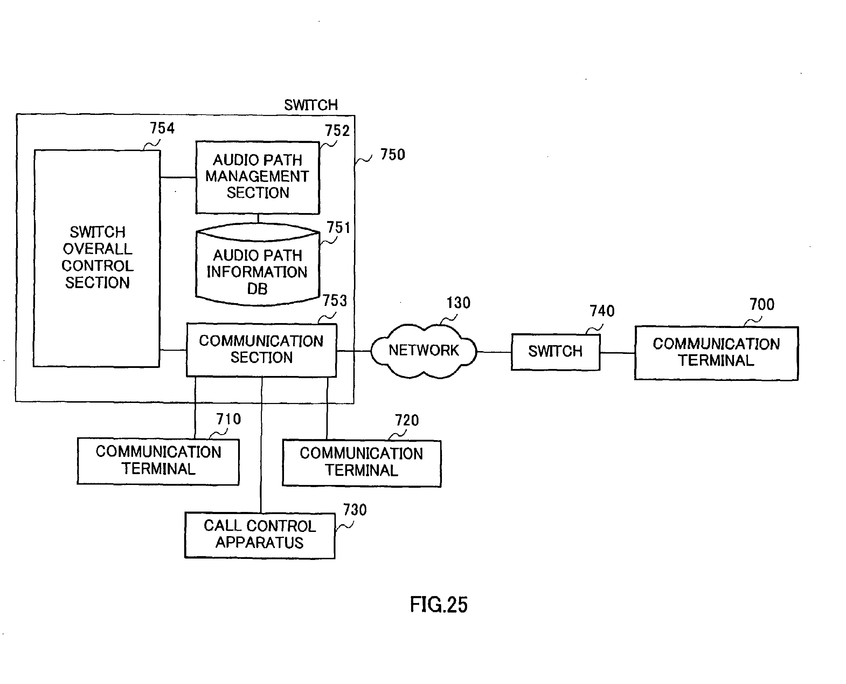

In this switching system, as shown in FIG.25, a communication terminal 700 is connected to a network 130 via a switch 740, and a communication terminal 710, communication terminal 720, and call control apparatus 730 are connected to network 130 via a switch 750. Switch 750 comprises an audio path information database 751 that stores audio path information for all subordinate communication terminals, an audio path management section 752 that manages audio path information database 751, a communication section 753 that handles packet communication, and a switch overall control section 754 that controls communication section 753 and audio path management section 752.

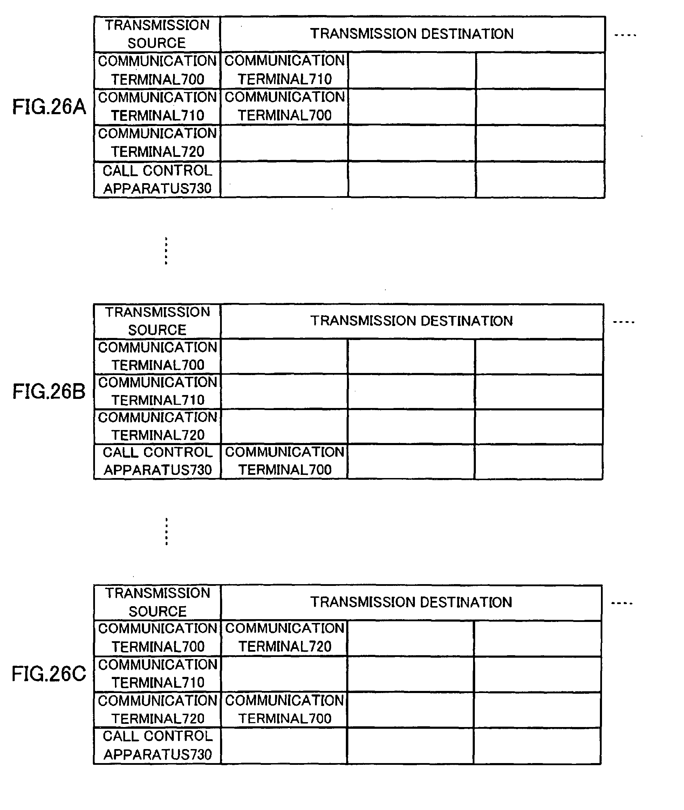

In this switching system, audio path information for a call relayed by switch 750 is written to audio path information database 751. FIG.26A through FIG.26C show examples of audio path information database contents. In the audio path information database, a communicating party currently engaged in a call with a transmission source is described as a transmission destination. FIG.26A shows audio path information database contents when communication terminal 700 and communication terminal 710 are engaged in a call.

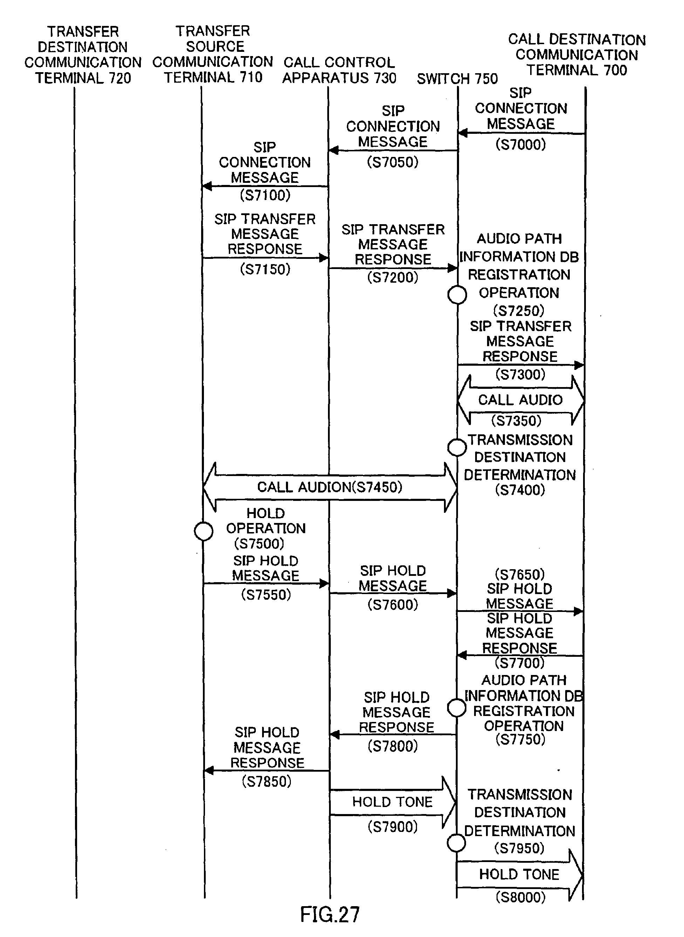

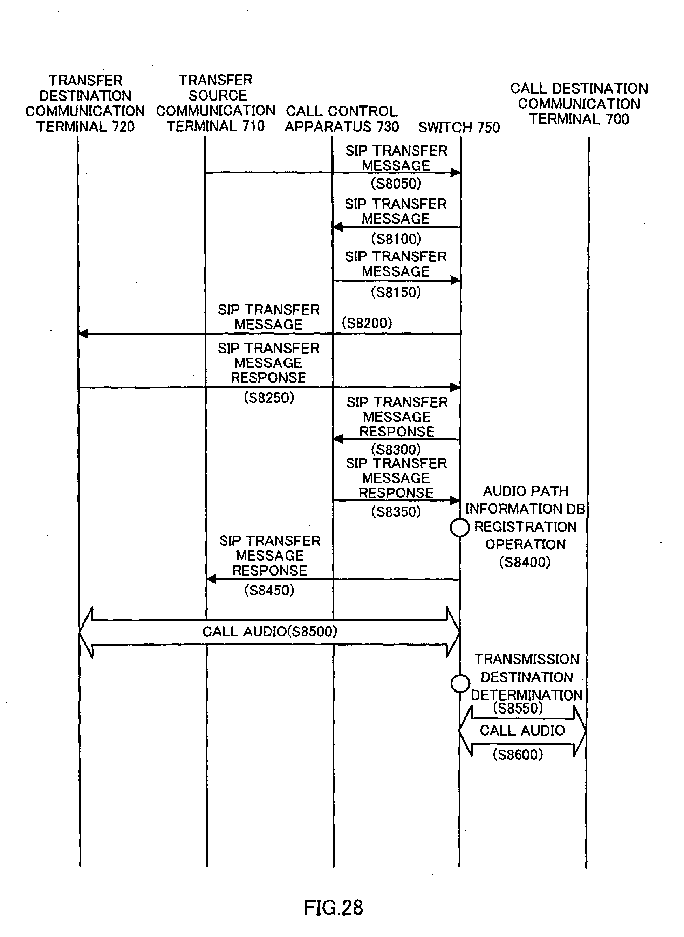

An example of operation in this switching system will now be described using FIG.27, and FIG.28 showing the continuation of FIG.27.

FIG.27 shows the procedure whereby communication terminal 700 and communication terminal 710 establish a call state, then a hold operation is performed by communication terminal 710, and a hold tone is provided to communication terminal 700 from call control apparatus 730. FIG.28 shows the procedure whereby transfer processing from communication terminal 700 to communication terminal 720 is performed, and up to the point where a call between communication terminal 700 and communication terminal 720 becomes possible. In this description it is assumed that messages flowing between the communication terminals are SIP messages.

Communication terminal 700 transmits to switch 750 an SIP connection message specifying communication terminal 710 as the communicating party (S7000). The header of this SIP connection message contains address information for receiving-side communication terminal 700 and address information for transmitting-side communication terminal 710, and a connection command is included as a message.

Switch 750 then sends the received SIP connection message to call control apparatus 730 (S7050).

Call control apparatus 730 receives the SIP connection message (S7050), performs address analysis, and transmits the SIP connection message to communication terminal 710 (S7100).

Communication terminal 710 then receives the SIP connection message (S7100), and transmits an SIP connection message response to call control apparatus 730 (S7150).

Call control apparatus 730 receives the SIP connection message response (S7150), performs address analysis, and transmits the SIP connection message response to switch 750 (S7200).

Based on the result of the above analysis, switch 750 registers audio path information for communication terminal 700 and communication terminal 710 in audio path information database 751 (S7250), and then transmits the SIP connectionmessage response to communication terminal 700 (S7300). FIG.26A shows audio path information database 751 contents at this time.

On receiving the SIP connection message response (S7300), communication terminal 700 starts a call (S7350), and on receiving this, switch 750 determines the transmission destination from the information in audio path information database 751 (S7400), and transmits call audio from communication terminal 700 to communication terminal 710 (S7450).

When a hold operation is performed by communication terminal 710 while communication terminal 700 and communication terminal 710 are in a call state in this way (S7500), communication terminal 710 transmits an SIP hold message to call control apparatus 730 (S7550). The header of this SIP hold message contains hold source communication terminal 710 address information and hold destination communication terminal 700 address information, and a hold command is included as a message.

On receiving the SIP hold message (S7550), call control apparatus 730 performs address analysis and transmits the SIP hold message to switch 750 (S7600).

Based on the result of the above analysis, switch 750 then transmits the SIP hold message to communication terminal 700 (S7650), and on receiving this, communication terminal 700 transmits an SIP hold message response to switch 750 (S7700).

On receiving the SIP hold message response (S7700), switch 750 registers audio path information for call control apparatus 730 providing a hold tone and communication terminal 700 in the audio path information database (S7750), and then transmits the SIP hold message response to call control apparatus 730 (S7800). FIG.26B shows audio path information database 751 contents at this time.

On receiving the SIP hold message response (S7800), call control apparatus 730 transmits the SIP hold message response to communication terminal 710 (S7850) and also transmits a hold tone to switch 750 (S7900).

Switch 750 then determines the hold tone sending destination based on audio path information database 751 (S7950), and transmits a hold tone to communication terminal 700 (S8000).

On receiving the SIP hold message response (S7850), communication terminal 710 transmits an SIP transfer message to switch 750 (S8050). The header of this SIP transfer message contains transfer source communication terminal 710 address information andtransfer destination communication terminal 720 address information, and a transfer command is included as a message.

Switch 750 then transmits this SIP transfer message to call control apparatus 730 (S8100).

On receiving the SIP transfer message (S8100), call control apparatus 730 performs address analysis and transmits the SIP transfer message to switch 750 (S8150)

Based on the result of the above analysis, switch 750 then transmits the SIP transfer message to communication terminal 720 (S8200).

On receiving the SIP transfer message (S8200), communication terminal 720 transmits an SIP transfer message response to switch 750 (S8250).

Switch 750 then transmits the SIP transfer message response to call control apparatus 730 (S8300).

On receiving the SIP transfer message response (S8300), call control apparatus 730 performs address analysis and transmits the SIP transfer message response to switch 750 (S8350).

Based on the result of the above analysis, switch 750 registers audio path information for transfer destination communication terminal 720 and call destination communication terminal 700 in audio path information database 751 (S8400), and then transmits the SIP transfer message response to transfer source communication terminal 710 (S8450). FIG . 26C shows audio path information database 751 contents at this time.

Communication terminal 720 then starts a call (S8500), and on receiving this, switch 750 determines the transmission destination from the information in audio path information database 751 (S8550), and transmits call audio from communication terminal 720 to communication terminal 700 (S8600).

In this way, communication terminal 700 and communication terminal 720 enter the call state.

Thus, in a switching system according to this embodiment, when a communication terminal 700 located in an external network is engaged in a call with a communication terminal 710 via a switch 750, communication terminal 700 can switch the call destination to another communication terminal 720 subordinate to switch 750 without the need for any operation whatsoever, such as audio path changing, exchange of information on the changing, hold tone provision, and the like, by communication terminal 700. In this case, it is possible for switch 750 to transfer a communication terminal 700 call simply by switching the audio path to a subordinate communication terminal.

Also, when an IP address is specified between communication terminals and audio exchange is performed directly on a Peer to Peer basis, as with conventional technology, if the far-end communication terminal is a product of a different manufacturer, there are problems of mutual compatibility with regard to the audio path switching timing and method, and so forth, but such problems do not arise with a switching system according to this embodiment.

In addition, various modifications of this embodiment are also possible.

Namely, in this embodiment, a case has been described in which SIP messages are used as transfer messages, but operation of this embodiment is also possible by means of other messages.

Also, in this embodiment, a case has been described in which transfer is performed from a call between communication terminal 700 and communication terminal 710 to a call between communication terminal 700 and communication terminal 720, but transfer from a transfer source to transfer destination communication terminal is possible simply by switching the audio path between switch and communication terminal, for any communication terminals subordinate to the switch.

Moreover, the fourth modification shown in Embodiment 1 can also be applied to this embodiment.

Furthermore, in this embodiment a case of transfer has been described, but it is also possible to apply this embodiment to the hold tone provision method in Embodiments 1 through 4. In all cases, a switch according to the present invention does not allocate an arriving IP packet to a subordinate terminal based on the IP packet destination (address), but performs IP packet allocation based on path information. That is to say, with a switch according to the present invention, the distribution destinations of control messages exchanged between communication terminals are stored in the switch as audio switching destination path information, and subsequent audio packets are switched based on that path information.

As is clear from the above description, the present invention has the following effects.

In a switching system in which a hold source communication terminal converts held hold data to audio that can be interpreted by the hold destination communication terminal, it is possible to provide a hold tone that the far-end terminal can interpret, without providing a number of hold tones equivalent to the number of codecs for one hold tone, enabling the amount of memory to be reduced.

Also, in a switching system in which a hold destination communication terminal converts received hold data to audio that can be interpreted by that communication terminal, it is possible to play back a hold tone even if a hold tone is received that is not supported by the hold destination communication terminal.

Furthermore, in a switching system in which a call control apparatus converts received hold data attached to a hold message to audio that can be interpreted by the hold destination communication terminal, it is possible to play back a hold tone even if the hold destination communication terminal does not have a conversion section for each audio codec.

Moreover, in a switching system in which a call control apparatus constantly distributes a hold tone by means of multicasting, and a hold destination communication terminal obtains hold data by entering into the multicast group, it is possible to provide a hold tone to a plurality of terminals simultaneously without having the call control apparatus provide a plurality of audio paths.

In addition, in a switching system in which, using multicasting in a call audio path, a call between a transfer source communication terminal and call destination communication terminal is put on hold, and is transferred to a call between the call destination communication terminal and transfer destination communication terminal, it is possible for hold and transfer to be carried out on one audio path for the three communication terminals involved in the hold and transfer, enabling the load imposed on audio path control and buffer control to be alleviated.

Also, in a switching system in which a call control apparatus stores presence information as to the possibility of telephone call response for all users using subordinate communication terminals, and a transfer source communication terminal performs transfer processing by confirming the possibility of telephone call response by the transfer destination communication terminal based on this presence information, it is possible for hold and transfer operations to be carried out without an audio conversation being conducted between the user of the transfer source communication terminal and the user of the transfer destination communication terminal.

Furthermore, in a switching system in which a switch transfers a call of an external network communication terminal by switching the audio path to a subordinate communication terminal, at the time of this transfer, the external network communication terminal does not need to perform any operation whatsoever-such as audio path changing, change-related information exchange, or hold tone provision.

This application is based on Japanese Patent Application No.2001-386259 filed on December 19, 2001, entire contents of which are expressly incorporated by reference herein.

### Industrial Applicability

The present invention is applicable to a switching system that switches audio calls, etc., performed in real time between communication terminals via a network, LAN, or the like, for example.

## Claims

1. A switching system that connects a first communication terminal and a second communication terminal via a network, wherein:
said first communication terminal comprises:
a storage section that stores hold data used when said first communication terminal places said second communication terminal into a hold state;
a conversion section that converts hold data stored in said storage section to a data format that can be processed by said second communication terminal; and
a transmission section that transmits hold data after conversion by said conversion section to said second communication terminal; and
said second communication terminal comprises:
a reception section that receives hold data after conversion transmitted from said first communication terminal; and
a playback section that processes and plays back received hold data.

2. The switching system according to claim 1, wherein:
said network is an IP (Internet Protocol) network; and
said first communication terminal and said second communication terminal perform packet communications mutually via said IP network.

3. The switching system according to claim 2, wherein messages transmitted and received between said first communication terminal and said second communication terminal are SIP (Session Initiation Protocol) messages.

4. The switching system according to claim 1, further comprising a call control apparatus that is connected to said network and performs intermediation of communications of said first communication terminal and said second communication terminal.

5. The switching system according to claim 1, further comprising a switch apparatus that is connected to said network and relays communications of said first communication terminal and said second communication terminal, wherein said switch apparatus comprises:
a path information storage section that stores a distribution destination of a control message transmitted and received between communication terminals as switching destination path information; and
a switching section that performs path switching based on path information stored in said path information storage section, and transmits to said second communication terminal hold data after conversion transmitted from said first communication terminal.

6. A communication terminal comprising:
a storage section that stores hold data used when placing another communication terminal connected via a network into a hold state;
a conversion section that converts hold data stored in said storage section to a data format that can be processed by said other communication terminal; and
a transmission section that transmits hold data after conversion by said conversion section to said other communication terminal.

7. A switch apparatus that is connected to a network and relays communications of a first communication terminal and a second communication terminal, said switch apparatus comprising:
a path information storage section that stores a distribution destination of a control message transmitted and received between communication terminals as switching destination path information; and
a switching section that performs path switching based on path information stored in said path information storage section, and transmits to said second communication terminal data transmitted from said first communication terminal.

8. A switching system that connects a first communication terminal and a second communication terminal via a network, wherein:
said first communication terminal comprises:
a storage section that stores hold data used when said first communication terminal places said second communication terminal into a hold state;
an attachment section that attaches hold data stored in said storage section to a hold message transmitted from said first communication terminal to said second communication terminal in a hold operation; and
a transmission section that transmits a holdmessage to which hold data has been attached by said attachment section; and
said second communication terminal comprises:
a reception section that receives a hold message after hold data attachment transmitted from said first communication terminal;
an acquisition section that acquires hold data attached to a received hold message;
a conversion section that converts hold data acquired by said acquisition section to a data format that can be processed by said second communication terminal; and
a playback section that processes and plays back hold data after conversion by said conversion section.

9. The switching system according to claim 8, wherein:
said network is an IP network; and
said first communication terminal and said second communication terminal perform packet communications mutually via said IP network.

10. The switching system according to claim 9, wherein messages transmitted and received between said first communication terminal and said second communication terminal are SIP messages.

11. The switching system according to claim 8, further comprising a call control apparatus that is connected to said network and performs intermediation of communications of said first communication terminal and said second communication terminal.

12. The switching system according to claim 8, further comprising a switch apparatus that is connected to said network and relays communications of said first communication terminal and said second communication terminal, wherein said switch apparatus comprises:
a path information storage section that stores a distribution destination of a control message transmitted and received between communication terminals as switching destination path information; and
a switching section that performs path switching based on path information stored in said path information storage section, and transmits to said second communication terminal a hold message after hold data attachment transmitted from said. first communication terminal.

13. A communication terminal comprising:
a storage section that stores hold data used when placing another communication terminal connected to a network into a hold state;
an attachment section that attaches hold data stored in said storage section to a hold message transmitted from said communication terminal to said other communication terminal in a hold operation; and
a transmission section that transmits a hold message to which hold data has been attached by said attachment section.

14. A communication terminal comprising:
a reception section that receives a hold message after hold data attachment transmitted from another communication terminal connected to a network;
an acquisition section that acquires hold data attached to a received hold message;
a conversion section that converts hold data acquired by said acquisition section to a data format that can be processed by said communication terminal; and
a playback section that processes and plays back hold data after conversion by said conversion section.

15. A switching system that connects a first communication terminal and a second communication terminal via a network through intermediation of a call control apparatus, wherein:
said first communication terminal comprises:
a storage section that stores hold data used when said first communication terminal places said second communication terminal into a hold state;
a first attachment section that attaches hold data stored in said storage section to a hold message transmitted from said first communication terminal to said second communication terminal in a hold operation; and
a transmission section that transmits a hold message to which hold data has been attached by said first attachment section;
said call control apparatus comprises:
a first reception section that receives a hold message after hold data attachment transmitted from said first communication terminal;
a first acquisition section that acquires hold data attached to a received hold message;
a conversion section that converts hold data acquired by said first acquisition section to a data format that can be processed by said communication terminal;
a second attachment section that attaches hold data after conversion by said conversion section to said received hold message; and
a second transmission section that transmits a hold message to which hold data after conversion has been attached by said second attachment section; and
said second communication terminal comprises:
a second reception section that receives a hold message after hold data attachment transmitted from said call control apparatus;
a second acquisition section that acquires hold data after conversion attached to a received hold message; and
a playback section that processes and plays back hold data after conversion acquired by said second acquisition section.

16. The switching system according to claim 15, wherein:
said network is an IP network; and
said first communication terminal and said second communication terminal perform packet communications mutually via said IP network.

17. The switching system according to claim 15, wherein messages transmitted and received between said first communication terminal and said second communication terminal through intermediation of said call control apparatus are SIP messages.

18. The switching system according to claim 15, wherein:
said call control apparatus further comprises a database section that stores information relating to a data format that can be processed by each communication terminal; and
said conversion section converts hold data acquired by said first acquisition section to a data format that can be processed by said second communication terminal based on information stored in said database section.

19. The switching system according to claim 15, further comprising a switch apparatus that is connected to said network and relays communications of said first communication terminal and said second communication terminal via said call control apparatus, wherein said switch apparatus comprises:
a path information storage section that stores a distribution destination of a control message transmitted and received between communication terminals via said call control apparatus as switching destination path information; and
a switching section that performs path switching based on path information stored in said path information storage section, transmits to said call control apparatus a hold message after hold data attachment transmitted from said first communication terminal, and transmits to said second communication terminal a hold message after attachment of hold data after conversion transmitted from said call control apparatus.

20. A call control apparatus that is connected to a network that connects a first communication terminal and a second communication terminal, and performs intermediation of communications of said first communication terminal and said second communication terminal, saidcall control apparatus comprising:
a reception section that receives a hold message after hold data attachment transmitted from said first communication terminal;
an acquisition section that acquires hold data attached to a received hold message;
a conversion section that converts hold data acquired by said acquisition section to a data format that can be processed by said second communication terminal;
an attachment section that attaches hold data after conversion by said conversion section to said received hold message; and
a transmission section that transmits a hold message to which hold data after conversion has been attached by said attachment section.

21. A switch apparatus that is connected to a network and relays communications of a first communication terminal and a second communication terminal via a call control apparatus, said switch apparatus comprising:
a path information storage section that stores a distribution destihation of a control message transmitted and received between communication terminals via said call control apparatus as switching destination path information; and
a switching section that performs path switching based on path information stored in said path information storage section, transmits to said call control apparatus data transmitted from said first communication terminal, and transmits to said second communication terminal data transmitted from said call control apparatus.
